**Europäisches Patentamt**

**European Patent Office**

**Office européen des brevets**

(11) Veröffentlichungsnummer: **0 352 788 B1**

(12) **EUROPÄISCHE PATENTSCHRIFT**

(45) Veröffentlichungstag der Patentschrift: **06.10.93**

(51) Int. Cl.⁵: **G01L 5/16**, G01L 3/00

(21) Anmeldenummer: **89113873.7**

(22) Anmeldetag: **27.07.89**

㊴ **Messrad.**

(30) Priorität: **28.07.88 DE 3825700**

(43) Veröffentlichungstag der Anmeldung:
**31.01.90 Patentblatt 90/05**

(45) Bekanntmachung des Hinweises auf die
Patenterteilung:
**06.10.93 Patentblatt 93/40**

(84) Benannte Vertragsstaaten:
**AT DE ES FR GB IT NL SE**

(56) Entgegenhaltungen:
**EP-A- 0 132 163      DE-A- 3 213 319**
**DE-A- 3 516 234      DE-C- 3 342 817**
**DE-U- 8 210 190      GB-A- 2 188 733**
**JP-A-52 133 270**

(73) Patentinhaber: **FRAUNHOFER-GESELLSCHAFT**
**ZUR FÖRDERUNG DER ANGEWANDTEN FOR-**
**SCHUNG E.V.**
**Leonrodstrasse 54**
**D-80636 München 19(DE)**

(72) Erfinder: **Neugebauer, Jürgen, Dr.-Ing.**
**Weyprechtstrasse 10**
**D-6100 Darmstadt(DE)**
Erfinder: **Grubisic, Vatroslav, Dr.-Ing.**
**Zum Stetteritz 1**
**D-6107 Reinheim(DE)**

## Beschreibung

Die Erfindung betrifft ein Meßrad mit einer Nabe und einer Felge, sowie mit wenigstens einer Verbindungsanordnung zwischen Nabe und Felge, und mit einem oder mehreren Meßelementen bzw. Meßwertaufnehmern in oder an der Verbindungsanordnung zum Messen von Kräften und/oder Momenten bzw. zur Meßwertaufnahme von Kräften und/oder Momenten, die am rotierenden Meßrad wirksam sind, wobei die Verbindungsanordnung zwischen Nabe und Felge folgendes umfaßt:

(a) eine die Nabe in den Radaxialrichtungen sowie um die Hochachse und die Längsachse des Meßrads steif, dagegen in den übrigen Richtungen weich mit der Felge verbindende Axialverbindungsanordnung;

(b) eine die Nabe in den Radialrichtungen des Meßrads steif, dagegen in den übrigen Richtungen weich mit der Felge verbindende Radialverbindungsanordnung; und

(c) eine die Nabe in den Umfangsrichtungen um die Raddrehachse herum sowie gegebenenfalls in Radialrichtung(en) steif, dagegen in den übrigen Richtungen weich mit der Felge verbindende Tangentialverbindungsanordnung;

wobei wenigstens ein Meßelement in oder an wenigstens einer der Verbindungsanordnungen zum Messen derjenigen Kraft oder desjenigen Moments vorgesehen ist, die bzw. das in einer solchen Richtung zwischen der Nabe und Felge übertragen wird, in welcher letztere durch die jeweilige Verbindungsanordnung steif miteinander verbunden sind.

Für die Konstruktion und Bemessung von Personen- und Nutzkraftfahrzeugen ist es von großer Wichtigkeit, die im praktischen Betrieb eines Personen-oder Nutzkraftfahrzeus vorhandenen Kräfte und Momente, welche über die Fahrzeugräder auf das Personen- oder Nutzkraftfahrzeug einwirken, zu messen. Die Ermittlung dieser Kräfte und Momente geschieht u.a. mittels sogenannter Meßräder, die entweder an Versuchsfahrzeugen anmontiert sind, so daß sie den verschiedensten in der Praxis auftretenden Belastungen ausgesetzt werden, oder die auf Versuchtsständen an Fahrzeugen oder Fahrzeugkomponenten anmontiert, programmierten Belastungen, die praktische Bedingungen simulieren sollen, unterworfen werden.

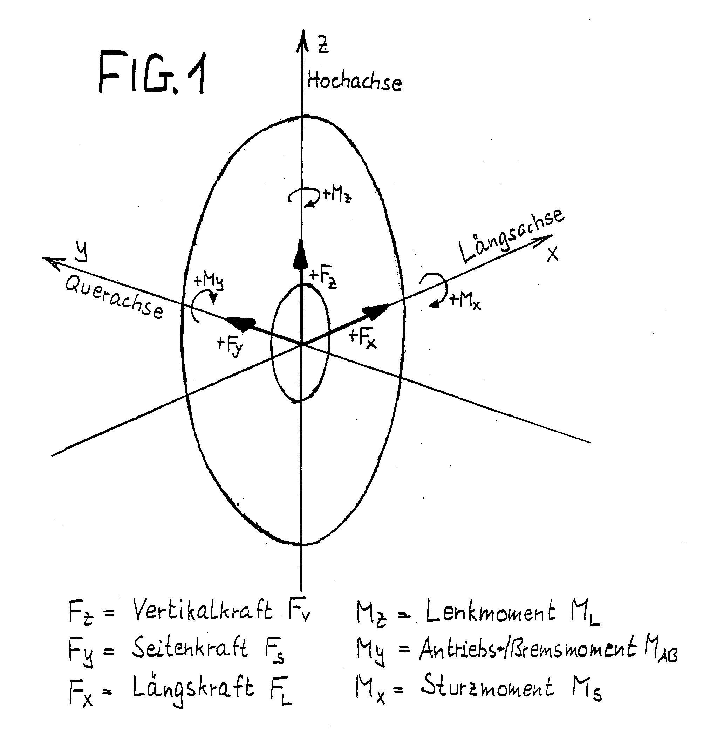

Bevor auf die Problematik derartiger Meßräder näher eingegangen wird, seien zunächst unter Bezugnahme auf die Figur 1 die zu messenden Kräfte und Momente erläutert:

In Figur 1 ist symbolisch-perspektivisch ein Fahrzeugrad mit Felge durch zwei konzentrische Ellipsen angedeutet, und zwar mit einem x-y-z-Koordinatensystem, welches zur Definition der auftretenden Kräfte und Momente derart angeordnet ist, daß die y-Koordinatenachse mit der Fahrzeugraddrehachse zusammenfällt, während die x-Koordinatenachse und die z-Koordinatenachse radial bezüglich des Fahrzeugrads verlaufen, und zwar verläuft erstere horizontal und letztere vertikal. Die x-Koordinatenachse wird in der Kraftfahrzeugtechnik auch als Längsachse bezeichnet, während die y-Koordinatenachse auch als Querachse und die z-Koordinatenachse auch als Hochachse bezeichnet wird. Die auftretenden und interessierenden Kräfte und Momente sind

(a) die in Richtung der Hochachse z wirkende Kraft $F_z$, die auch als Vertikalkraft $F_V$ bezeichnet wird,

(b) die in Richtung der Querachse y wirkende Kraft $F_y$, die auch als Seitenkraft $F_S$ bezeichnet wird, und

(c) die in Richtung der Längsachse x wirkende Kraft $F_x$, die auch als Längskraft $F_L$ bezeichnet wird, sowie

(d) das um die Hochachse z wirkende Moment $M_z$, das auch als Lenkmoment $M_L$ bezeichnet werden kann,

(e) das um die Querachse y wirkende Moment $M_y$, das auch als Antriebs-/Bremsmoment $M_{AB}$ bezeichnet wird, und

(f) das um die Längsachse x wirkende Moment $M_x$, das auch als Sturzmoment $M_S$ bezeichnet werden kann.

Die für die vorliegenden Ausführungen per definitionem festgelegten jeweiligen positiven Richtungen der Vertikalkraft $F_z$, der Seitenkraft $F_y$ und der Längskraft $F_x$ sowie der ebenfalls per definitionem festgelegte jeweilige positive Sinn des Lenkmoments $M_z$, des Antriebs-/Bremsmoments $M_y$ und des Sturzmoments $M_x$ sind in Figur 1 angegeben.

Obwohl die schematische Darstellung der Figur 1 den Eindruck erweckt, als sei es verhältnismäßig einfach, die angegebenen Kräfte und Momente zu messen, hat es sich in der jahrzehntelangen Praxis tatsächlich als schwierig und kompliziert erwiesen, diese Kräfte und Momente mittels Meßrädern zu ermitteln. Zwar ist es auf den verschiedenste Art und Weise möglich, Kräfte und Momente zu messen, die an einem Fahrzeugrad im Betrieb auftreten, indem man ein solches Fahrzeugrad durch Einbau entsprechender Meßelemente zu einem Meßrad umgestaltet. Jedoch ergeben sich in mehrfacher Hinsicht Probleme, aus den Meßwerten, die mit Meßrädern der bisher bekannten Art erhalten werden, brauchbare und zuverlässige Angaben über die tatsächlich in der Praxis am Fahrzeug auftretende Vertikal-, Seiten- und Längskraft sowie über das tatsächlich in der Praxis auftretende Lenk-, Sturz- und Antriebs-/Bremsmoment zu erhalten, und zwar insbesondere aus folgenden Gründen:

(1) Da in den bekannten Meßrädern mit den einzelnen Meßelementen die zu erfassenden Vertikal-, Seiten- und Längskräfte sowie die zu ermittelnden Lenk-, Sturz- und Antriebs-/Bremsmomente nicht gesondert durch jeweilige Meßelemente erfaßt werden, sondern die Meßsignale der einzelnen Meßelemente von unterschiedlichen Kraftanteilen herrühren, ist es erforderlich, die einzelnen Kraftanteile aus den Meßsignalen zu ermitteln. Diese "Entkopplung" der einzelnen, von den unterschiedlichen Kraftanteilen herrührenden Meßsignale, sowie die erforderliche Transformation vom rotierenden in ein feststehendes Koordinatensystem muß von einem Rechner durchgeführt werden, der ein spezielles, aufwendiges und teures Meßdatenverarbeitungsprogramm hierzu benötigt.

Zwar versucht man bei gewissen Meßrädern, wie beispielsweise bei dem in der deutschen Gebrauchsmusterschrift 82 10 190 beschriebenen Meßrad, bei denen die Kräfte über Dehnungsmeßstreifen gemessen werden, die auf Speichen appliziert sind, welche Nabe und Felge verbinden, die einzelnen Kraftkomponenten durch spezielles Verschalten der Dehnungsmeßstreifen voneinander zu trennen. Das erübrigt aber keinesfalls erhebliche rechentechnische Aufwendungen, da eine komplexe Kalibriermatrix, welche die Empfindlichkeiten sowie das Übersprechverhalten des Meßrades in Abhängigkeit von der Winkelstellung beschreibt, zu jedem Zeitpunkt verarbeitet und in ein raumfestes Koordinatensystem transformiert werden muß.

(2) Eine weitere Schwierigkeit besteht darin, daß bei Fahrbetriebsmessungen die Verformung des Reifens einen großen Einfluß auf das Meßergebnis bei bekannten Meßrädern hat. Denn durch die Verschiebung des resultierenden Kraftangriffspunkts am Reifen wird ständig die Reaktion der einzelnen Meßelemente verändert. Besonders wichtig wird dieses Problem, wenn man Messungen mit völlig gleicher senkrechter und seitlicher Kraft, jedoch mit unterschiedlichen Reifenluftdrücken in Betracht zieht.

(3) Schließlich haben die bekannten Meßräder im allgemeinen ein Gewicht, das weit über dem entsprechenden Gewicht derjenigen Räder liegt, die tatsächlich in der Praxis eingesetzt werden. Ein solches wesentlich höheres Gewicht wirkt sich im Betrieb an einem drehenden Rad nachteilig auf die Genauigkeit aus, da das Schwingungsverhalten des Fahrwerks durch eine solche Erhöhung der ungefederten Masse deutlich verändert wird.

Insbesondere ist aus der DE 3 213 319 A1 und der JP 52-133 270 (Int. Klasse G01L 5/16) ein Meßrad der eingangs genannten Art bekannt. In diesem Meßrad werden die Kräfte über derart kombinierte Axial-Radial-Tangential-Verbindungsanordnungen zwischen Nabe und Felge übertragen, daß alle übertragenen Kräfte immer durch den Meßquerschnitt des jeweiligen Radialverbindungselements jeder der kombinierten Axial-Radial-Tangential-Verbindungsanordnungen hindurchwirken,auf dem auch die Meßelemente (Dehnungsmeßstreifen) angebracht sind, um die verschiedenen übertragenen Kräfte damit zu messen. Dadurch ergeben sich nicht nur komplizierte Meßverhältnisse, sondern die Anpassung muß an die größte zu übertragende Kraft erfolgen, wo mehrere Kraftflußpfade in dem jeweiligen Verbindungselement verlaufen, wodurch sich für die kleineren Kräfte in einem anderen Kraftflußpfad eine schlechte Meßempfindlichkeit ergibt.

Weiter werden bei dem Meßrad nach der DE 3 213 319 A1 und der JP 52-133 270 nur Biegemomente gemessen, was bedeutet, daß das System relativ "weich", das heißt elastisch nachgiebig, wird, wenn eine hinreichende Meßempfindlichkeit erzielt werden soll. Durch diese Weichheit ergeben sich niedrige Eigenfrequenzen der Nabe, und damit wird der dynamische Meßbereich stark eingeschränkt.

Außerdem ergibt sich bei dem Meßrad nach der DE 32 13 319 A1 durch die dort vorgesehenen geschwächten radial äußeren Enden der Radialverbindungen in Verbindung mit den daran anschließenden Tangentialverbindungen (Sehnenglieder) eine Torsionsweichheit bezüglich des Antriebs- oder Bremsmoments, die eine vernünftige Messung derselben nicht zuläßt.

Schließlich erfolgt die Messung bei dem Meßrad nach der DE 3 213 319 A1 nur am stehenden Rad, während das Meßrad nach der JP 52-133 270, wenn es an einem Fahrzeug angebracht werden soll, erhebliche bauliche Modifizierungen am Fahrzeug erfordert.

Endlich ist aus der DE 3 342 817 C2 eine Meßnabe bekannt, bei der übertragene Kräfte durch relativ kleine Stege, die Schubkräfte messen, ermittelt werden, wobei über diese Stege jeweils nur ein Bruchteil der gesamten übertragenen Kraft gemessen wird, was ein völlig anderes Meßprinzip ist, als es der vorliegenden Erfindung zugrundeliegt.

Aufgabe der Erfindung ist es demgegenüber insbesondere, ein Meßrad der eingangs genannten Art so auszubilden, daß dieses es bei relativ kleinem, weitgehend dem Gewicht von Serienrädern entsprechendem Eigengewicht ermöglicht, die interessierenden Kräfte und Momente relativ genau sowie ohne erheblichen rechentechnischen Aufwand und unabhängig von den auftretenden Reifenverformungen zu messen.

Diese Aufgabe wird mit einem Meßrad der eingangs genannten Art erfindungsgemäß dadurch gelöst, daß die Radialverbindungsanordnung und/oder die Axialverbindungsanordnung und/oder die Tangentialverbindungsanordnung kraftflußmäßig unabhängig voneinander zwischen Nabe und Felge angebracht sind und jeweils getrennte Kraftflußpfade für die radialen und/oder die axialen und/oder die tangentialen Kräfte zwischen Nabe und Felge bilden.

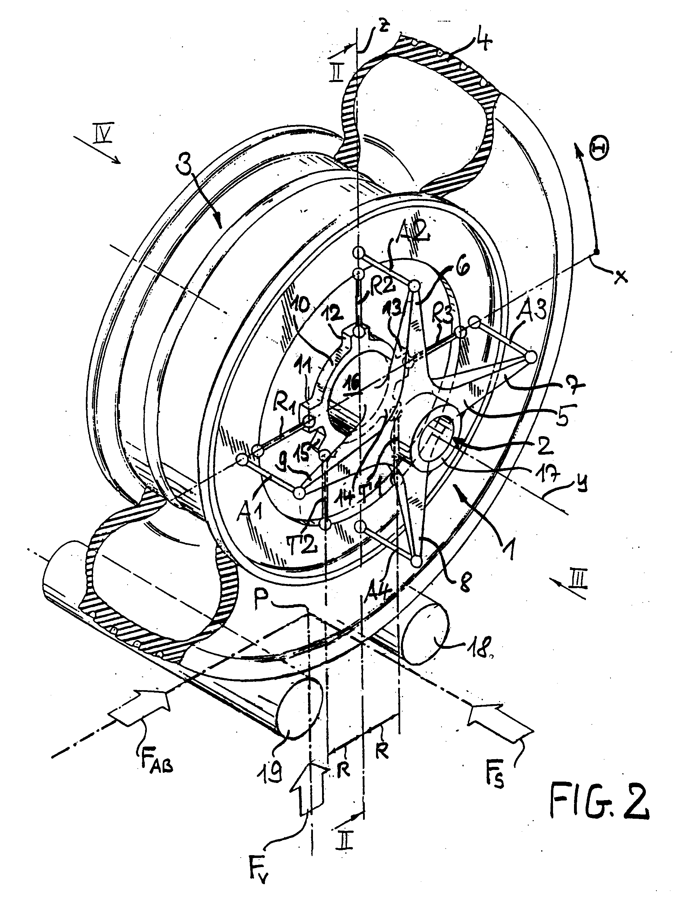

Bezüglich der Angabe "sowie gegebenenfalls in Radialrichtung(en)" eingangs unter (c) ist hier erläuternd zu sagen, daß dann, wenn die Tangentialverbindungseinrichtung nur aus einer einzigen Tangentialverbindung besteht, keine Steifigkeit in irgendeiner Radialrichtung vorhanden ist. Wenn dagegen die Tangentialverbindungseinrichtung aus zwei parallelen Tangentialverbindungen (wie in der Ausführungsform nach Figuren 2 bis 5) besteht, dann ergibt sich eine Steifigkeit in einer einzigen Radialrichtung; und wenn die Tangentialverbindungseinrichtung aus drei oder mehr Tangentialverbindungen besteht, kann sich je nach ihrer Anordnung eine Steifigkeit in einer oder mehreren Radialrichtungen ergeben.

Durch diese erfindungsgemäße Ausbildung des Meßrads werden insbesondere die einzelnen Kraftanteile, welche mittels der Meßelemente bzw. über die Meßwertaufnehmer ermittelt werden, so weitgehend voneinander getrennt, daß zur Berechnung der Vertikalkraft, der Seitenkraft, der Längskraft, des Lenkmoments, des Sturzmoments und des Antriebs-/Bremsmoments kein erheblicher rechentechnischer Aufwand mehr erforderlich ist, insbesondere keine komplexe Kalibriermatrix benötigt wird, welche die Empfindlichkeiten sowie ein - hier nicht vorhandenes - Übersprechverhalten des Meßrads in Abhängigkeit von der Winkelstellung beschreibt, und es wird auch keine Transformation vom rotierenden in ein feststehendes Koordinationsystem benötigt. Der Einfluß der Reifenverformung auf die durch die Meßelemente erhaltenen bzw. über die Meßaufnehmer abgenommenen Meßgrößen wird ausgeschaltet. Das Meßrad kann, wie die beschriebene Ausführungsform deutlich zeigt, ein Gewicht erhalten, das wesentlich geringer als dasjenige von bekannten Meßrädern ist.

Aufgrund der getrennten Kraftflußpfade werden getrennte Meßpfade erhalten, und in den einzelnen Kraftflußpfaden können die Meßquerschnitte hinsichtlich der Meßempfindlichkeit an die einzelnen Meßgrößen angepaßt werden.

Besonders vorteilhaft ist es, wenn die Axialverbindungsanordnung einerseits und die Radial- und Tangentialverbindungsanordnung andererseits kraftflußmäßig unabhängig voneinander zwischen Nabe und Felge angebracht sind und jeweils getrennte Kraftflußpfade für die axialen Kräfte einerseits und für die radialen und tangentialen Kräfte andererseits zwischen Nabe und Felge bilden.

Im einzelnen können in oder an jeder der drei Verbindungsanordnungen, nämlich der Axialverbindungsanordnung und/oder der Radialverbindungsanordnung und/oder der Tangentialverbindungsanordnung ein oder mehrere Meßelemente bzw. Meßwertaufnehmer vorgesehen sein. Bevorzugt ist das Meßrad nach der Erfindung so ausgebildet, daß die Axialverbindungsanordnung aus wenigstens drei Verbindungen besteht, die vorzugsweise gleichmäßig über den Umfang der Nabe bzw. Felge verteilt angeordnet sind.

Weiterhin ist das erfindungsgemäße Meßrad bevorzugt so ausgebildet, daß die Axialverbindungsanordnung aus vier Axialverbindungen besteht, die gleichmäßig über den Umfang der Nabe bzw. Felge verteilt angeordnet sind.

Darüberhinaus ist das Meßrad gemäß der Erfindung bevorzugt so ausgebildet, daß die Radialverbindungsanordnung aus wenigstens zwei Radialverbindungen besteht, die radial nicht miteinander fluchten und vorzugsweise einen Winkel von 90° miteinander bilden. Die Bedingung, daß die Radialverbindungen radial nicht miteinander fluchten sollen, gilt ausschließlich für den Fall, daß nur zwei Radialverbindungen vorgesehen sind. Sind mehr als zwei Radialverbindungen vorhanden, so können durchaus hierunter miteinander fluchtende Radialverbindungen sein.

Bei einer besonders bevorzugten Ausführungsform des erfindungsgemäßen Meßrads besteht die Radialverbindungsanordnung aus drei Radialverbindungen, die über einen Umfangswinkelbereich der Nabe bzw. Felge von 180° gleichmäßig verteilt sind. Bei dieser Radialverbindungsanordnung fluchten also zwei der beiden Radialverbindungen miteinander, während die dritte Radialverbindung je einen Winkel von 90° mit jeder der beiden miteinander fluchtenden Radialverbindungen bildet.

Die Tangentialverbindungsanordnung ist vorzugsweise so ausgebildet, daß sie aus wenigstens einer Tangentialverbindung besteht. Besonders bevorzugt ist es jedoch, daß die Tangentialverbindungsanordnung aus zwei Tangentialverbindungen besteht, die parallel zu einer Radiallinie der Radachse sowie beidseitig und im gleichen Abstand von dieser Radiallinie angeordnet sind.

Wenn die zuletztgenannte, besonders bevorzugte Tangentialverbindungsanordnung zusammen mit der weiter oben genannten Radialverbindungsanordnung aus drei über einen Umfangswinkelbereich von 180° gleichmäßig verteilten Radialverbindungen angewandt wird, dann werden die einzelnen Tangentialverbindungen mit Bezug auf die erwähnten drei Radialverbindung besonders bevorzugt so angeordnet, daß die mittlere der drei Radialverbindungen, welche über den Umfangsbereich der Nabe bzw. Felge um 180° gleichmäßig verteilt sind, auf der über die Radachse hinaus verlaufenden Verlängerung der jeweiligen Radiallinie liegt, auf deren beiden Seiten die beiden Tangentialverbindungen angeordnet sind.

Vorzugsweise ist das Meßrad gemäß der Erfindung so ausgebildet, daß jede Radialverbindung zusammen mit einer Axialverbindung in einer diesen beiden Verbindungen gemeinsamen Radialebene angeordnet ist, welche die Radachse enthält.

Baulich sind die Axial-, Radial- und Tangentialverbindungsanordnung bevorzugt so zwischen Nabe und Felge vorgesehen, daß die Axialverbindungsanordnung an einem ersten Nabenvorsprungsteil in dem einen axialen Endbereich der Nabe angreift, während die Radial- und Tangentialverbindungsanordnung an einem zweiten Nabenvorsprungsteil in dem entgegengesetzten axialen Endbereich der Nabe angreift.

Obwohl das erste und/oder zweite Nabenvorsprungsteil die verschiedensten Formen haben können, insbesondere als ringförmige Vorsprungsteile ausgebildet sein können, wird es aus den bereits näher dargelegten Gründen eines möglichst niedrigen Gewichts bevorzugt, daß das erste und/oder zweite Nabenvorsprungsteil als erster und/oder zweiter Nabenstern ausgebildet ist, an dessen Sternarmen, die auch als Ausleger bezeichnet werden können, die jeweilige Axial- bzw. Radial- bzw. Tangentialverbindung angreift. So können beispielsweise an den Sternarmen des einen Nabensterns die Axialverbindungen angreifen, während an den Sternarmen des anderen Nabensterns die Radial- und Tangentialverbindungen angreifen.

Eine besonders günstige bauliche Ausbildung, die ein Auswechseln der Nabenvorsprungsteile und/oder deren Verstellen gegenüber der Felge ermöglicht, zeichnet sich dadurch aus, daß das erste und zweite Nabenvorsprungsteil über einen hülsenförmigen Verbindungsteil zu einem Nabenaußenteil fest miteinander verbunden, insbesondere einstückig miteinander und mit dem Verbindungsteil ausgebildet, und als bauliche Einheit lösbar an einem radial inneren Nabeninnenteil befestigt sind.

Im einzelnen kann dieser Aufbau so ausgebildet sein, daß die lösbare Befestigung des Nabenaußenteils an dem Nabeninnenteil folgendes umfaßt:

(a) eine axial verschiebbare, vorzugsweise drehfeste, Befestigung des hülsenförmigen Verbindungsteils an dem Nabeninnenteil, insbesondere eine Kerbzahnungsverbindung zwischen dem Nabeninnenteil und dem Verbindungsteil;

(b) einen ersten axialen Anschlag an dem einen axialen Ende und einen zweiten axialen Anschlag an dem entgegengesetzten axialen Ende des Verbindungsteils, sowei einen ersten und zweiten Gegenanschlag an dem Nabeninnenteil; und

(c) eine Haltevorrichtung zum axialen Fixieren des Nabeninnenteils zwischen den beiden Gegenanschlägen.

Die Haltevorrichtung kann eine Zentralmutter sein oder umfassen, an welcher der eine der beiden Gegenanschläge vorgesehen ist. Zur Positionierung des Verbindungsteils zwischen den beiden Gegenanschlägen kann ein erstes Distanzstück vorgesehen sein, das zwischen den ersten Anschlag und den ersten Gegenanschlag einfügbar ist, und/oder ein zweites Distanzstück, das zwischen den zweiten Anschlag und den zweiten Gegenanschlag einfügbar ist. Durch verschiedene Distanzstücke kann die axiale Position des Nabenaußenteils auf dem Nabeninnenteil verändert werden.

Besonders bevorzugt ist es, die Anschläge und Gegenanschläge als konische Flächen auszubilden, wobei dann die Distanzstücke entsprechend als doppeltkonische Ringe ausgebildet sind.

Eine besonders vorteilhafte Ausbildung des Meßrads nach der Erfindung ergibt sich, wenn die Axialverbindungsanordnung und/oder die Radialverbindungsanordnung und/oder die Tangentialverbindungsanordnung eine Lenkerplattenverbindungsanordnung, insbesondere eine Lenkerblechverbindungsanordnung, umfaßt oder ist. Derartige Lenkerbleche sind an sich aus der Meßtechnik bekannt und bestehen im einfachsten Falle aus einer rechteckigen Platte oder einem rechteckigen Blech, die bzw. das aus elastischem Material, wie beispielsweise Stahl, hergestellt ist. Solche Lenkerplatten bzw. -bleche haben infolgedessen die Eigenschaft, daß sie in der Platten- bzw. Blechebene steif, dagegen in den übrigen Richtungen weich, d.h. elastisch nachgiebig sind. Sie wirken gewissermaßen als in einer Ebene kraftübertragende Elemente, die in den anderen Richtungen praktisch keine Kräfte übertragen, d.h. deren Kraftübertragung in den anderen Richtungen im Verhältnis zur Kraftübertragung in der erwähnten Ebene vernachlässigbar ist.

Im einzelnen kann die Axialverbindung und/oder die Radialverbindung und/oder die Tangentialverbindung eine Lenkerplattenverbindung, insbesondere eine Lenkerblechverbindung, umfassen oder sein. Die Lenkerplattenverbindung, insbesondere die Lenkerblechverbindung, ist hierbei bevorzugt so ausgebildet, daß sie eine erste und zweite Lenkerplatte, insbesondere ein erstes und zweites Lenkerblech, umfaßt, deren Platten- bzw. Blechebenen senkrecht zueinander verlaufen, wobei das eine Ende der einen Lenkerplatte bzw. des einen Lenkerblechs fest mit dem einen Ende der anderen Lenkerplatte bzw. des anderen Lenkerblechs verbunden ist, während das andere Ende der einen Lenkerplatte bzw. des einen Lenkerblechs fest mit der Nabe und das andere Ende der anderen Lenkerplatte bzw. des anderen Lenkerblechs fest mit der Felge verbunden ist.

Eine baulich besonders gedrängte und damit besonders günstige Ausbildung der jeweiligen Lenkerplatten- bzw. Lenkerblechverbindung wird gemäß einer bevorzugten Ausgestaltung der Erfindung dadurch erreicht, daß die beiden Lenkerplatten bzw. -bleche einer solchen Lenkerplatten- bzw. -blechverbindung so miteinander verbunden sind, daß sie über einen wesentlichen Bereich, vorzugsweise mehr als die Hälfte, ihrer Erstreckung zwischen dem ersten und zweiten Ende nebeneinander verlaufen, wobei, wenn es die baulichen Bedingungen erfordern, eine der beiden Lenkerplatten bzw. eines der beiden Lenkerbleche ganz oder teilweise in zwei parallele Streifen aufgeteilt sein kann.

Dieses Nebeneinanderverlaufen der beiden Lenkerplatten bzw. -bleche einer Lenkerplatten- bzw. -blechverbindung läßt sich auf zwei verschiedene Arten erreichen:

(1) Die eine dieser beiden Arten besteht darin, daß bei einer Axialverbindung die beiden Lenkerplatten bzw. -bleche von der Verbindungsstelle ihrer einen Enden aus in der gleichen Axialrichtung verlaufen, oder bei einer Radialverbindung die beiden Lenkerplatten bzw. -bleche von der Verbindungsstelle ihrer einen Enden aus in der gleichen Radialrichtung verlaufen, oder bei einer Tangentialverbindung die beiden Lenkerplatten bzw. -bleche von der Verbindungsstelle ihrer einen Enden aus in der gleichen Tangentialrichtung verlaufen.

(2) Die andere Art besteht darin, daß die einen Enden der beiden Lenkerplatten bzw. -bleche mittels Verbindungsstücken miteinander verbunden sind, welche sich von ihrer Befestigungsstelle an dem einen Ende der einen Lenkerplatte bzw. des einen Lenkerblechs in Richtung nach dem anderen Ende der einen Lenkerplatte bzw. des einen Lenkerblechs zu ihrer Befestigungsstelle an dem einen Ende der anderen Lenkerplatte bzw. des anderen Lenkerblechs erstrecken.

Die beiden Lenkerplatten bzw. -bleche der Lenkerplatten- bzw. -blechverbindung können zusammen mit dem bzw. den sie verbindenden Verbindungstück bzw. -stücken einstückig miteinander sowie gegebenenfalls mit einem oder mehreren Anschlußteilen zum Befestigen an der Nabe und/oder Felge ausgebildet sein.

Das Meßelement ist vorzugsweise jeweils aus einer Axial- oder Radial- oder Tangentialverbindung und einem oder mehreren in oder an dieser Verbindung applizierten Dehnungsmeßstreifen gebildet. Insbesondere wird im Falle von Lenkerplatten bzw. -blechen das Meßelement aus einer oder beiden Lenkerplatten bzw. einem oder beiden Lenkerblechen einer Lenkerplatten- bzw. -blechverbindung und einem oder mehreren darauf applizierten Dehnungsmeßstreifen gebildet.

Besonders bevorzugt ist die Anordnung und Verschaltung der Dehnungsmeßstreifen so ausgeführt, daß in oder an einer Axial- und/oder Radial- und/oder Tangentialverbindung, insbesondere auf einer oder beiden Lenkerplatten bzw. auf einem oder beiden Lenkerblechen einer Lenkerplatten- bzw. -blechverbindung, mehrere Dehnungsmeßstreifen derart appliziert und zu Halb- oder Vollbrücken verschaltet sind, daß nur die Zuganteile der wirkenden Kraft gemessen und die Biegeanteile dieser Kraft herauskompensiert werden.

Zur vorteilhaften Befestigung der Verbindungsanordnungen zwischen Nabe und Felge kann an der Stirnfläche der Felge ein Felgenring angebracht sein, an dem die felgenseitigen Enden der Axial- und/oder Radial- und/oder Tangentialverbindungen befestigt sind.

Schließlich ist das erfindungsgemäße Meßrad vorzugsweise mit einem Sinus- und Kosinusgeber versehen, der, wie weiter unten näher erläutert ist, eine besonders günstige Ermittlung der Vertikal- und Längskraft sowie des Moments um die Hochachse und die Längsachse ermöglicht.

Die Erfindung sei nachstehend anhand einiger, besonders bevorzugter Ausführungsformen unter Bezugnahme auf die Figuren 1 bis 5 der Zeichnung näher erläutert; es zeigen:

Figur 1    eine schematische Darstellung der am Fahrzeugrad auftretenden grundsätzlichen Kräfte und Momente;

Figur 2    eine perspektivische Darstellung des prinzipiellen Aufbaus einer besonders bevorzugten Ausführungsform eines Meßrads nach der Erfindung;

Figur 3    einen Axialschnitt durch eine Ausführungsform eines erfindungsgemäßen Meßrads, in welcher die Nabe mittels Lenkerplatten- bzw. -blechverbindungen mit der Felge verbunden ist, wobei die Lenkerplatten- bzw. -blechverbindungen entsprechend den in Figur 2 dargestellten allgemeineren Verbindungen angeordnet sind;

Figur 4    eine Seitenansicht auf das Meßrad der Figur 3 in Richtung des in dieser Figur eingezeichneten Pfeils III; und

Figur 5    eine Seitenansicht des Meßrads der Figur 3 in Richtung des in dieser Figur eingezeichneten Pfeils IV.

Es sei zunächst auf Figur 2 Bezug genommen, die eine bevorzugte Ausführungsform eines Meßrads in perspektivischer Ansicht zeigt:

Das Meßrad 1 umfaßt eine Nabe 2 und eine Felge 3, auf welcher ein Reifen 4 aufgezogen ist, von dem aus Darstellungsgründen ein Teil weggeschnitten ist.

Die Nabe besitzt in der dargestellten Ausführungsform einen ersten Nabenvorsprungsteil 5, der als erster Nabenstern ausgebildet ist und vier Sternarme 6, 7, 8 und 9 aufweist. Dieser Nabenvorsprungsteil 5 ist in dem einen axialen Endbereich der Nabe 2 vorgesehen. In dem anderen axialen Endbereich der Nabe 2 ist ein zweiter Nabenvorsprungsteil 10 angeordnet, der als zweiter Nabenstern ausgebildet ist und fünf Sternarme 11 bis 15 hat. Der erste Nabenvorsprungsteil 5 und der zweite Nabenvorsprungsteil 10 sind durch einen hülsenförmigen Verbindungsteil 16 fest miteinander zu einem Nabenaußenteil verbunden. Diese feste Verbindung kann auch in der Weise ausgeführt sein, daß die beiden Nabenvorsprungsteile 5 und 10 und der Verbindungsteil 16 miteinander einstückig ausgebildet sind.

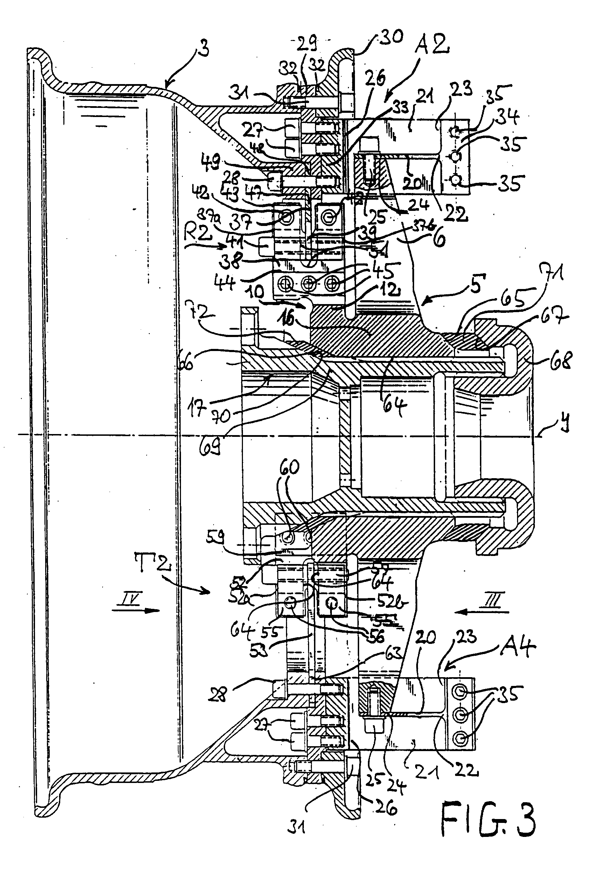

Weiter besitzt die Nabe 2 einen bezüglich des Nabenaußenteils 5, 10, 16 radial inneren Nabeninnenteil 17, auf dem der Nabenaußenteil lösbar befestigt ist. Die Aufteilung der Nabe in einen Nabeninnenteil 17 und einen Nabenaußenteil 5, 10, 16 ermöglicht es, einerseits den Nabenaußenteil 5, 10, 16 gegen einen anderen Nabenaußenteil auszutauschen, und sie ermöglicht es andererseits, wie weiter unten noch anhand der Ausführungsform der Figuren 3, 4 und 5 näher erläutert ist, den Nabenaußenteil 5, 10, 16 in axial unterschiedlichen Positionen gegenüber der Felge anzuordnen, wenn die Befestigungsvorrichtung zum Befestigen des Nabenaußenteils 5, 10, 16 auf dem Nabeninnenteil 17 entsprechend ausgebildet ist, beispielsweise so, wie in Figur 3 dargestellt.

Zum Messen von Kräften und/oder Momenten, die am rotierenden Meßrad 1 wirksam sind, ist zwischen der Nabe 2 und der Felge 3 eine Verbindungsanordnung vorgesehen, die folgendes umfaßt:

(a) Eine Axialverbindungsanordnung, die in der vorliegenden Ausführungsform aus vier Axialverbindungen A1, A2, A3 und A4 besteht. Diese Axialverbindungen erstrecken sich in der konzentrisch ausgerichteten Position der Nabe 2 parallel zur Radachse y (die in Figur 2 angegebenen Achsen stimmen mit denjenigen der Figur 1 überein) und auch, wie bereits erwähnt, als Querachse bezeichnet wird. Die Axialverbindungen A1 bis A4 greifen an ihren einen Enden jeweils an einem Ende eines der Sternarme 6 bis 9 und an ihrem anderen Ende an der benachbarten Stirnfläche der Felge 3 an. Die vorliegend wesentliche Eigenschaft dieser aus den Axialverbindungen A1 bis A4 bestehenden Axialverbindungsanordnung besteht darin, daß sie die Nabe 2 des Meßrads 1 in den Radaxialrichtungen, also in der Richtung der Querachse y, sowie um die Hochachse z und die Längsachse x des Meßrads 1 steif, dagegen in den übrigen Richtungen weich mit der Felge 3 verbindet.

(b) Eine Radialverbindungsanordnung, die aus den Radialverbindungen R1, R2 und R3 besteht, welche in der zentrierten Stellung der Nabe 2, radial verlaufen und an ihren radial inneren Enden an je einem der freien Enden der Sternarme 11, 12 und 13 des zweiten Nabenvorsprungsteils 10 angreifen, während sie mit ihren radial äußeren Enden am Innenumfang der Felge 3 befestigt sind. Die aus den Radialverbindungen R1, R2 und R3 bestehende Radialverbindungsanordnung hat die besondere Eigenschaft, daß sie die Nabe 2 in den Radialrichtungen des Meßrads 1 steif mit der Felge verbindet, während sie die Nabe in den übrigen Richtungen weich mit der Felge 3 verbindet.

(c) Eine Tangentialverbindungsanordnung, die aus den Tangentialverbindungen T1 und T2 besteht, welche mit ihren Enden am freien Ende von je einem der Sternarme 14 und 15 des zweiten Nabenvorsprungsteils 10 angreifen, während sie mit ihren anderen Enden an der radial inneren Seite der Felge 3 angreifen. Diese Tangentialverbindungen T1 und T2 haben die besondere Eigenschaft, daß sie die Nabe 2 in den Umfangsrichtungen um die Raddrehachse bzw. die Querachse y herum steif mit der Felge verbinden, während sie die Nabe in den übrigen Richtungen weich mit der Felge 3 verbinden.

Die Tatsache, daß die Axialverbindungen A1 bis A4 die Nabe 2 in den Richtungen der Querachse y, d.h. also der Radachse und um die Hochachse z sowie um die Längsachse x mit der Felge steif verbinden, dagegen die Nabe 2 in den übrigen Richtungen mit der Felge 3 weich verbinden, und die Tatsache, daß die Radialverbindungen R1 bis R3 die Nabe 2 in den Radialrichtungen steif mit der Felge verbinden, dagegen die Nabe 2 in den übrigen Richtungen weich mit der Felge 3 verbinden, sowie die Tatsache, daß die Tangentialverbindungen T1 und T2 die Nabe in den Umfangsrichtungen um die Querachse y herum sowie in der Radialrichtung, in welcher die beiden Tangentialverbindungen orientiert sind, steif mit der Felge 3 verbinden, dagegen die Nabe in den übrigen Richtungen weich mit der Felge verbinden, ist in Figur 2 dadurch zum Ausdruck gebracht, daß die beiden Enden von jeder der Axialverbindungen A1 bis A4, der Radialverbindungen R1 bis R3 und der Tangentialverbindungen T1, T2 als Kugelgelenke dargestellt sind, die durch einen Stab miteinander verbunden sind. Wenn auch als Axial-, Radial- und Tangentialverbindungen alle Arten von Verbindungen verwendbar sind, welche die vorstehende Steifigkeits-Weichheits-Bedingung erfüllen, werden, wie in Verbindung mit der Ausführungsform nach den Figuren 3, 4 und 5 näher erläutert ist, als Axial-, Radial- und Tangentialverbindungen Lenkerplatten- bzw. -blechverbindungen der weiter unten angegebenen und beschriebenen Art bevorzugt, da sie baulich und Meßtechnisch besonders vorteilhaft sind.

In der vorliegenden Ausführungsform sind an allen Axial-, Radial- und Tangentialverbindungen Meßaufnehmer, bevorzugt in Form von Dehnungsmeßstreifen, vorgesehen, die zusammen mit der jeweiligen Axial-, Radial- und Tangentialverbindung je ein Meßelement bilden, mittels dessen folgende Kräfte gemessen werden können:

(1) In Axialrichtung werden durch die Axialverbindungen A1, A2, A3 und A4 über die daran vorgesehenen Meßwertaufnehmer die parallel zur Querachse y ausgerichteten axialen Kräfte FA1, FA2, FA3 und FA4 gemessen.

(2) In den Radialrichtungen werden mittels der Radialverbindungen R1, R2 und R3 in Verbindung mit den daran vorgesehenen Meßwertaufnehmern die radialen Kräfte FR1, FR2 und FR3 gemessen.

(3) In tangentialen Richtungen (entsprechend der Ausrichtung der Tangentialverbindungen T1 und T2) werden mittels der Tangentialverbindungen T1 und T2 in Verbindung mit den daran angebrachten Meßwertaufnehmern die tangentialen Kräfte FT1 und FT2 gemessen.

In der vorliegenden Ausführungsform der Figur 2, welche in der Anzahl und Anordnung der Axial-, Radial- und Tangentialverbindungen mit der Ausführungsform nach den Figuren 3, 4 und 5 übereinstimmt, sind die Axial-, Radial- und Tangentialverbindungen in folgender Weise angeordnet:

(a) Die vier Axialverbindungen A1, A2, A3 und A4 sind gleichmäßig über den Umfang der Nabe 2 und der Felge 3 verteilt.

(b) Die drei Radialverbindungen R1, R2 und R3 sind über einen Umfangswinkelbereich der Nabe 2 bzw. Felge 3 von 180° gleichmäßig verteilt; dieser Umfangswinkelbereich erstreckt sich von der Axialverbindung A1 über die Axialverbindung A2 bis zur Axialverbindung A3.

(c) Die beiden Tangentialverbindungen T1 und T2 sind parallel zu einer Radiallinie angeordnet, welche vorliegend mit der Hochachse z zusammenfällt, und sie erstrecken sich im gleichen Abstand R auf beiden Seiten dieser Radiallinie, wobei auf der Verlängerung dieser Radiallinie nach oben über die Querachse y hinaus die mittlere der drei Radialverbindungen R1 bis R3, also die Radialverbindung R2, liegt.

(d) Jede Radialverbindung R1, R2 und R3 liegt zusammen mit einer Axialverbindung A1, A2 und A3 auf einer gemeinsamen Radialebene, welche die Querachse y, also die Radachse, enthält.

Es sei außerdem bezüglich der Figur 2 darauf hingewiesen, daß das Abrollen des Meßrads auf einer Rollfläche durch zwei Walzen 18 und 19 angedeutet ist, so daß der die Vertikalkraft $F_V$ symbolisierende Pfeil in Figur 2 gleichzeitig mit den die Antriebs-/Bremskraft $F_{AB}$ und die Seitenkraft $F_S$ symbolisierenden Pfeilen auf die Position des gedachten Radaufstandspunkts P zeigt.

Aufgrund der in den Figuren 2 dargestellten und in der Ausführungsformen nach den Figuren 3, 4 und 5 in näheren Einzelheiten verwirklichten Anordnung und Ausbildung der vier Axialverbindungen A1 bis A4, der drei Radialverbindungen R1 bis R3 und der beiden Tangentialverbindungen T1 und T2 ergeben sich die in Figur 1 dargestellten Kräfte und Momente in besonders einfacher und vorteilhafter Weise wie folgt:

(1)     Vertikalkraft $F_V = F_z = (F_{R1} - F_{R3})\sin\theta + [F_{R2} - (F_{T1} + F_{T2})]\cos\theta$

(2)     Seitenkraft $F_S = F_y = F_{A1} + F_{A2} + F_{A3} + F_{A4}$

(3)     Längskraft $F_L = F_x = (F_{R1} - F_{R3})\cos\theta + [-(F_{R2} - (F_{T1} + F_{T2})]\sin\theta$

$(^4)$     $\Omega\epsilon\nu\chi\mu o\mu\epsilon\nu\tau\ \partial_\Omega\ ''\ \partial_\xi\ ''\ (\Pi_{\nabla^3}\ .\ \Pi_{\nabla^1})\sigma\ \nu\theta - (F_{A2} - F_{A4})\cos\theta$

(5)     Antriebs-/Bremsmoment $M_{AB} = M_y = (F_{T1} - F_{T2}) \bullet R$

(6)     Sturzmoment $M_S = M_x = (F_{A3} - F_{A1})\cos\theta - (F_{A2} - F_{A4})\sin\theta$

Hierin ist mit $\theta$ der Drehwinkel bezeichnet, dessen Sinus und Kosinus durch einen am Meßrad 1 vorgesehenen, jedoch nicht dargestellten Sinus-Kosinus-Geber erhalten wird, wobei $\theta$ der Raddrehwinkel ist, wie er in Figur 2 eingezeichnet ist.

In den Formeln (4) und (6) wurden die Abstände für die Bildung der Momente vernachlässigt.

Es sei nun die Ausführungsform eines Meßrads gemäß den Figuren 3, 4 und 5 näher erläutert, die sich von der Ausführungsform nach Figur 2, wie bereits erwähnt, im wesentlichen nur dadurch unterscheidet, daß die Axial-, Radial- und Tantentialverbindungen als Lenkerplatten- bzw. -blechverbindungen ausgeführt sind und daß die Nabe und derjenige Bereich der Felge, an welcher die Lenkerplatten- bzw. -blechverbindungen angreifen, baulich detaillierter ausgeführt und in näheren Einzelheiten dargestellt sind; es werden daher für gleiche oder gleichartige Teile in den Figuren 3, 4 und 5 die gleichen Bezugszeichen wie in Figur 2 verwendet.

Zunächst seien die Axial-, Radial- und Tangentialverbindungen zwischen der Nabe 2 und der Felge 3 des Meßrads 1 der Figuren 3, 4 und 5 näher erläutert:

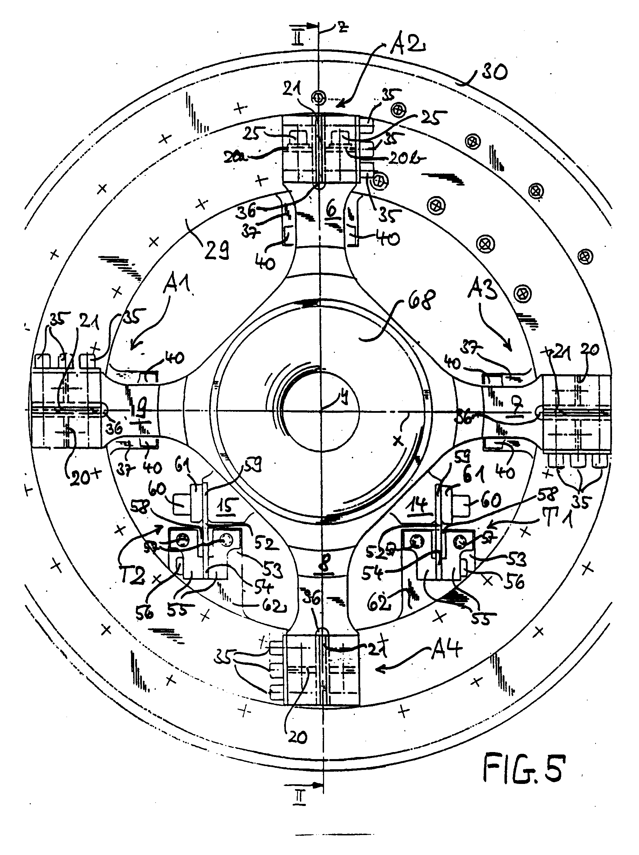

(A) Die Axialverbindungen A1, A2, A3 und A4 sind aus Figur 3, welche einem Schnitt entlang der Linie II-II der Figur 2 entspricht, und aus Figur 5 ersichtlich. Jede dieser Axialverbindungen ist in gleicher Weise aufgebaut und befestigt, so daß hier, um Wiederholungen zu vermeiden, nur eine dieser Axialverbindungen, nämlich die Axialverbindung A2 und deren Befestigung an dem Sternarm 6 des als erster Nabenstern ausgeführten Nabenvorsprungsteils 5 einerseits und an der Felge 3 andererseits beschrieben wird. Außerdem sei darauf hingewiesen, daß nachstehend nur noch von Lenkerblechverbindungen und Lenkerblechen gesprochen wird, obwohl diese auch durch nichtmetallische Lenkerplatten bzw. Lenkerplattenverbindungen ersetzt werden können, beispielsweise aus Graphitverbundmaterial oder Kunststoff oder Kunststoffverbundmaterial etc.

Im einzelnen umfaßt die Axialverbindung A2 ein erstes ebenes Lenkerblech 20 und ein zweites ebenes Lenkerblech 21. Die Platten- bzw. Blechebenen dieser beiden Lenkerbleche 20 und 21 verlaufen senkrecht zueinander, und zwar erstreckt sich die Platten- bzw. Blechebene des ersten Lenkerblechs 20 in Figur 3 senkrecht zur Zeichnungsebene, während sich die Platten- bzw. Blechebene des zweiten Lenkerblechs 21 in der Zeichnungsebene und damit in einer die Querachse y enthaltenden Radialebene erstreckt. Das eine Ende 22 des ersten Lenkerblechs 20 ist mit dem einen Ende 23 des zweiten Lenkerblechs 21 fest verbunden, während das andere Ende 24 des ersten Lenkerblechs 20 mittels Schrauben 25 mit dem freien Ende des zugeordneten Sternarms 6 fest verbunden ist. Das andere Ende 26 des zweiten Lenkerblechs 21 ist mittels Schrauben 27, 28 fest mit der Felge 3 verbunden, und zwar mit einem Felgenring 29, der als Zwischenstück zwischen dem in Figur 3 linken, größeren Teil der Felge und einem in Figur 3 rechten Felgenhorn 30 vorgesehen und mittels der Schrauben 28 sowie weiterer Schrauben 31 an dem erwähnten größeren Teil der Felge befestigt ist, wobei die Schrauben 31 gleichzeitig zur Befestigung des Felgenhorns 30 an dem größeren Teil der Felge 3 dienen und Dichtungsringe 32 an den äußeren Stoßstellen zwischen dem größeren Teil der Felge 3, dem Felgenring 29 und dem Felgenhorn 30 vorgesehen sind.

In der vorliegenden Ausführungsform ist das Lenkerblech 21 zusammen mit seinem an dem Ende 26 vorgesehenen Fuß 33, in welchen die Schrauben 27, 28 von der dem Ende 26 entgegengesetzten Seite her eingeschraubt sind, einstückig ausgebildet, so daß infolgedessen das Lenkerblech 21 zusammen mit dem Fuß 33 ein T-förmiges Teil bildet, da sich der plattenförmige, wenngleich wesentlicher dicker als das Lenkerblech 21 ausgebildete, Fuß 33 in seiner Plattenebene senkrecht zu der Platten- bzw. Blechebene des Lenkerblechs 21 erstreckt. Das Lenkerblech 20 ist in entsprechender Weise zusammen mit seinem am Ende 22 anschließenden Fuß 34 einstückig ausgebildet, so daß es zusammen mit diesem Fuß ebenfalls ein T-förmiges Teil ist. Jedoch ist in Figur 3 nur die Hälfte des Lenkerblechs 20 zu sehen, da dieses Lenkerblech zusammen mit seinem Fuß aus zwei T-förmigen Teilen besteht, die beiderseits des Lenkerblechs 21 angeordnet sind, wie in Figur 5 angedeutet ist. Die beiden Füße 34 der beiden Hälften des Lenkerblechs 20 bilden Verbindungsstücke, zwischen denen das Ende 23 des Lenkerblechs 21 mittels Schrauben 35, welche durch die beiden Füße 34 und das Ende 23 hindurchgehen eingespannt bzw. befestigt ist.

Wie man besonders gut aus Figur 3 ersieht, wird ein äußerst kompakter und gedrängter Aufbau der Lenkerblechanordnung 20, 21 dadurch erzielt, daß beide Lenkerbleche 20, 21 von ihrer Verbindungsstelle aus axial in der gleichen Richtung verlaufen, so daß sie infolgedessen gewissermaßen "ineinander verschachtelt" sind. Hierbei verläuft das Lenkerblech 21 teilweise durch einen Radialschlitz 36, der im freien Ende des Sternarms 6 ausgebildet ist (siehe insbesondere Figur 5).

Es sei hier darauf hingewiesen, daß die beiden Hälften der Lenkerbleche 20, die beiden Hälften des Fußes 34, das Lenkerblech 21 und der Fuß 33 als integrale Baueinheit, insbesondere insgesamt einstückiges Teil, ausgebildet sein können.

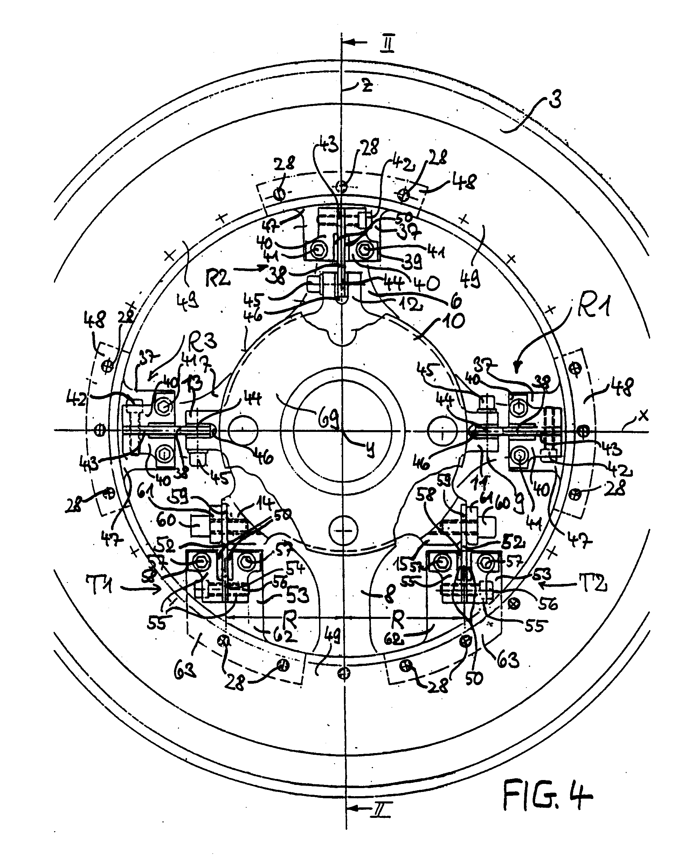

(B) Die aus Lenkerblechen aufgebaute Radialverbindung R2 ist in näheren Einzelheiten aus den Figuren 3 und 4 ersichtlich, während dagegen die baulichen Einzelheiten der übrigen beiden Radialverbindungen R1 und R3 nur in Figur 4 dargestellt sind. Da jedoch alle drei Radialverbindungen R1 bis R3 gleich aufgebaut sind, genügt es, daß nachstehend der Aufbau der Radialverbindung R2 anhand der Figuren 3 und 4 näher erläutert wird, da diese Erläuterungen in gleicher Weise auch für die übrigen beiden Radialverbindungen gelten:

Auch die Radialverbindung R2 umfaßt ein erstes Lenkerblech 37 und ein zweites Lenkerblech 38, wobei letzteres aus Figur 4 deutlicher zu ersehen ist. Die Platten- bzw. Blechebene des ersten Lenkerblechs 37, die, wie Figur 4 zeigt, in einer die Querachse y senkrecht schneidenden Radialebene liegt, verläuft senkrecht zu der Platten- bzw. Blechebene des zweiten Lenkerblechs 38, die, wie die Figuren 3 und 4 zeigen, in einer die Querachse y enthaltenden Radialebene liegt. Das eine Ende 39 des ersten Lenkerblechs 37 ist über Verbindungsstücke 40 sowie mittels Schrauben 41 und 42 fest mit dem einen Ende 43 des zweiten Lenkerblechs 38 verbunden. Das andere Ende 44 der zweiten Lenkerplatte 38 ist mittels Schrauben 45 mit dem freien Ende des Sternarms 12 des Nabenvorsprungsteils 10 fest verbunden, das zu diesem Zweck mit einem Schlitz 46 versehen ist, in welchem dieses Ende 44 mittels der Schrauben eingespannt bzw. befestigt ist. Das andere Ende 47 des ersten Lenkerblechs 37, welches in einem in Umfangsrichtung der Felge 3 verbreiterten Fuß 48 ausläuft, ist mittels der bereits erwähnten Schrauben 28, welche gleichzeitig zur Befestigung des Fußes 33 des Lenkerblechs 21 dienen, an der Felge 3 befestigt, und zwar derart, daß es zwischen einem radial inneren Felgenarm 49 und dem Felgenring 29 eingespannt ist, wie die Figur 3 zeigt.

Das bei den Radialverbindungen R1, R2 und R3 angewandte Kompaktaufbauprinzip, durch welches die bauliche Länge der kraftflußmäßig hintereinander angeordneten Lenkerbleche 37 und 38 sehr kurz gehalten wird, unterscheidet sich von dem bei den Axialverbindungen A1 bis A4 angewandten Kompaktaufbauprinzip und sei daher nachstehend näher erläutert:

Während das Kompaktaufbauprinzip bei den Axialverbindungen A1 bis A4 im wesentlichen darin besteht, daß der Kraftfluß gewissermaßen beim Übergang vom ersten Lenkerblech 20 zum zweiten Lenkerblech 21 um 180° umgekehrt wird, besteht das Kompaktaufbauprinzip bei den Radialverbindungen R1, R2 und R3 sowie auch bei den Tangentialverbindungen T1 und T2 darin, daß innerhalb der beiden hintereinander angeordneten Lenkerplatten die Kraftflußrichtung zwar gleichbleibt, aber man durch die besondere Ausgestaltung und Anbringung der Verbindungsstücke ein "Hintereinanderverschachteln" der beiden Lenkerbleche erreicht, was nun in näheren Einzelheiten anhand der Radialverbindung R2 erläutert sei:

Die Verbindungsstücke 40, von denen in der Radialverbindung R2 vier Stück vorgesehen sind, sind im wesentlichen S-förmig bzw. umgekehrt S-förmig ausgebildet und so mit dem einen Ende 39 des ersten Lenkerblechs 37 und dem einen Ende 43 des zweiten Lenkerblechs 38 verbunden, daß sie sich von ihrer Befestigungsstelle an dem einen Ende 39 der ersten Lenkerplatte 37 (die mittels der Schrauben 41 realisiert ist) um eine im Verhältnis zu der Erstreckung der beiden Lenkerplatten 37 und 38, gesehen in der Kraftflußrichtung, wesentliche Strecke nach dem anderen Ende 47 der ersten Lenkerplatte 37 zu zu ihrer Befestigungsstelle (die mittels der Schrauben 42 realisiert ist) an dem einen Ende 43 der zweiten Lenkerplatte 38 erstrecken. Auf diese Weise kommt es dazu, daß die beiden Lenkerbleche 37 und 38 über einen wesentlichen Bereich ihrer Erstreckung, gesehen in Kraftflußrichtung, nebeneinander verlaufen. Wie man aus Figur 4 ersieht, bilden die beiden Verbindungsstücke 40 durch ihre S-förmige bzw. umgekehrt S-förmige Ausbildung über einen wesentlichen Teil ihrer Erstreckung einen Spalt 50, dessen Dicke größer als die Dicke des Lenkerblechs 38 ist, so daß sich letzteres frei durch diesen Spalt erstreckt. Wegen der erzielten "Ineinanderverschachtelung" der beiden Lenkerbleche 37 und 38 ist es erforderlich, das Lenkerblech 38 mit einem Schlitz 51 (siehe Figur 3) in dem Bereich zu versehen, in dem es, gesehen in Kraftflußrichtung, neben dem Lenkerblech 37 verläuft, so daß infolgedessen das Lenkerblech 37 in diesem Bereich in zwei parallele Streifen 37a und 37b aufgeteilt ist, ähnlich wie das Lenkerblech der Axialverbindung A2 aus parallelen Streifen 20a und 20b besteht (siehe Figur 5), wobei jedoch die beiden Streifen 20a und 20b zwei separate Bauteile sind, die mittels der Schrauben 35 über den jeweiligen Fuß 34 aneinander befestigt sind, während im Gegensatz hierzu die beiden Streifen 37a und 37b des Lenkerblechs 37 der Radialverbindung R2 durch ihr Ende 44 zu einem gemeinsamen einstückigen Lenkerblech verbunden sind.

Die Lenkerbleche 37 und 38 und die zugehörigen Verbindungsstück 40 können gewünschtenfalls auch zu einem integralen, insbesondere einstückigen, Bauteil vereinigt sein, wie bereits hinsichtlich der Axialverbindungen dargelegt.

(C) Die beiden Tangentialverbindungen T1 und T2 sind in der gleichen grundsätzlichen Kompaktbauweise wie die Radialverbindung R1 bis R3 ausgeführt, so daß sie anhand der Tangentialverbindung T2 unter Bezugnahme auf die Figuren 3, 4 und 5 nachstehend nur kurz erläutert werden:

Die Tangentialverbindung T2 umfaßt ein erstes Lenkerblech 52 und ein zweites Lenkerblech 53, wobei sich die Platten- bzw. Blechebene des ersten Lenkerblechs 52 im Gegensatz zu den Platten- bzw. Blechebenen der ersten Lenkerbleche 38 der Radialverbindungen R1, R2 und R3 in einer Tangentialebene erstreckt, welche die Querachse y nicht enthält, sondern vielmehr parallel im Abstand R zu einer Radialebene verläuft, welche sowohl die Querachse y als auch die Hochachse z enthält. Die Platten- bzw. Blechebene des zweiten Lenkerblechs 53, die senkrecht zur Platten- bzw. Blechebene des ersten Lenkerblechs 52 verläuft, liegt in einer Radialebene, welche die Querachse y senkrecht schneidet, nämlich in Figur 4 praktisch in der Zeichnungsebene bzw. parallel zu derselben in geringem Abstand hiervon. Das eine Ende 54 des ersten Lenkerblechs 52 ist mittels Verbindungsstücken 55, die den Verbindungsstücken 40 entsprechen, und Schrauben 56, 57 mit dem einen Ende 58 des zweiten Lenkerblechs 53 fest verbunden. Das andere Ende 59 des ersten Lenkerblechs 52 ist mittels Schrauben 60 und einer Befestigungsplatte 61 an dem Sternarm 14 des Nabenvorsprungsteils 10 befestigt, während das andere Ende 62 des zweiten Lenkerblechs 53, das in einem in Felgenumfangsrichtung verbreiterten Fuß 63 ausläuft, mittels Schrauben 28 zwischen dem Felgenarm 49 und dem Felgenring 29 eingespannt ist.

Auch hier ist das gleiche Kompaktbauprinzip für das "Ineinanderverschachteln" der beiden Lenkerbleche 52 und 53 realisiert, wie es in den Radialverbindungen R1 bis R3 verwirklicht worden ist, so daß daher das eine der beiden Lenkerbleche, nämlich das Lenkerblech 52, durch einen Schlitz 64 (siehe Figur 3) teilweise in zwei Streifen 52a und 52b aufgeteilt ist und insgesamt vier Verbindungsstücke 55 vorgesehen sind. Auch hier kann, wie bereits bei den Axial- und Radialverbindungen erwähnt, die Lenkerblechverbindung einschließlich der Verbindungsstücke integral, insbesondere einstückig, ausgebildet sein. Auch ein oben erörterter Spalt 50 ist vorhanden.

Es sei nun noch der Aufbau der Nabe in der Ausführungsform nach den Figuren 3, 4 und 5 näher erläutert:

Zur lösbaren und axial positionierbaren Befestigung des aus dem sternförmigen ersten Nabenvorsprungsteil 5, dem hülsenformigen Verbindungsteil 16 und dem zweiten sternförmigen Nabenvorsprungsteil 10 bestehenden Nabenaußenteils an dem Nabeninnenteil 17 ist folgende Befestigungsvorrichtung vorgesehen:

(1) Eine Kerbverzahnungsverbindung 64 zwischen dem Nabeninnenteil 17 und dem hülsenförmigen Verbindungsteil 16, welche eine axial verschiebbare, jedoch drehfeste Befestigung des Verbindungsteils 16 an dem Nabeninnenteil 17 bildet;

(2) ein erster, konischer axialer Anschlag 65 an dem einen axialen Ende des Verbindungsteils 16 und ein zweiter, konischer axialer Anschlag 66 an dem entgegengesetzten axialen Ende des Verbindungsteils 16, sowie ein erster, konischer axialer Gegenanschlag 67 an einer Zentralmutter 68, die in das hülsenförmige Teil 69 der Nabe einschraubbar ist und zusammen mit diesem das Nabeninnenteil 17 bildet; weiter ist ein zweiter axialer, konischer Gegenanschlag 70 an dem der Zentralmutter 68 entgegengesetzten Ende des hülsenförmigen Teils 69 vorgesehen, das zu diesem Zweck an diesem Ende radial erweitert ist, wie die Figur 3 zeigt; und

(3) ein erstes Distanzstück 71 in Form eines doppeltkonischen Rings, welches zwischen dem Anschlag 65 und dem Gegenanschlag 67 angeordnet ist und in seiner Konizität derjenigen des Anschlags 65 und des Gegenanschlags 67 entspricht, sowie ein zweites Distanzstück 72, welches ebenfalls als doppeltkonischer Distanzring ausgebildet und zwischen dem Anschlag 66 und dem Gegenanschlag 70 angeordnet sowie in seiner Konizität derjenigen des Anschlags 66 und des Gegenanschlags 70 entsprechend ausgebildet ist. Je nach der gewünschten axialen Position des Nabenaußenteils 5, 10, 16 auf dem Nabeninnenteil 17 können unterschiedliche Distanzstücke 71 und/oder 72 oder gar keine Distanzstücke verwendet werden. Durch diese axiale Positionierung kann eine Anpassung an verschiedene Einpreßtiefen der Radschlüssel in die Felge erfolgen.

Selbstverständlich sind die unterschiedlichsten Abwandlungen im Rahmen der Erfindung möglich. So kann beispielsweise die Befestigung des Nabenaußenteils an dem Nabeninnenteil in verschiedenster Weise ausgebildet sein, ohne daß zwischen axial verschieb- und drehbarer Befestigung unterschieden wird. Weiter können die Lenkerplatten bzw. -bleche, die alle eben sind, aus unterschiedlichsten Werkstoffen bestehen.

Ein wesentlicher weiterer Vorteil des erfindungsgemäßen Meßrads besteht darin, daß es ohne jede Modifikation der Radaufhängung und Bremsanlage auskommt. Außerdem bildet die Meßanordnung eine Einheit und ist mit verschiedenen Felgenbreiten und -durchmessern kombinierbar. Hierzu können die Abmessungen, insbesondere Breite, des Felgenrings 29 und des Felgenhornrings 30 verändert werden.

Ein anderer, hier noch besonders hervorzuhebender Vorteil eines Meßrads nach der Erfindung besteht darin, daß an den Lenkerblechen Zugkräfte gemessen werden, während dagegen bei den Meßrädern nach den oben erörterten Druckschriften DE 3 213 319 A1 und JP 52-133 270 nur Biegemomente gemessen werden, was dort die eingangs erörterten Schwierigkeiten beinhaltet. Auch die Antriebs- und Bremsmomente lassen sich mit dem erfindungsgemäßen Meßrad ausgezeichnet messen.

**Patentansprüche**

1. Meßrad mit einer Nabe (2) und einer Felge (3), sowie mit wenigstens einer Verbindungsanordnung (A1 bis A4, R1 bis R3, T1, T2) zwischen Nabe (2) und Felge (3), und mit einem oder mehreren Meßelementen in oder an der Verbindungsanordnung (A1 bis A4, R1 bis R3, T1, T2) zum Messen von Kräften und/oder Momenten, die am rotierenden Meßrad (1) wirksam sind, wobei die Verbindungsanordnung (A1 bis A4, R1 bis R4, T1, T2) zwischen Nabe (2) und Felge (3) folgendes umfaßt:

   (a) eine die Nabe (2) in den Radaxialrichtungen sowie um die Hochachse und die Längsachse des Meßrads (1) steif, dagegen in den übrigen Richtungen weich mit der Felge (3) verbindende Axialverbindungsanordnung (A1 bis A4);

   (b) eine die Nabe (2) in den Radialrichtungen des Meßrads (1) steif, dagegen in den übrigen Richtungen weich mit der Felge (3) verbindende Radialverbindungsanordnung (R1 bis R3); und

   (c) eine die Nabe (2) in den Umfangsrichtungen um die Raddrehachse herum sowie gegebenenfalls in Radialrichtung(en) steif, dagegen in den übrigen Richtungen weich mit der Felge (3) verbindende Tangentialverbindungsanordnung (T1, T2);

   wobei wenigstens ein Meßelement in oder an wenigstens einer der Verbindungsanordnung (A1 bis A4, R1 bis R3, T1, T2) zum Messen derjenigen Kraft oder desjenigen Moments vorgesehen ist, die bzw. das in einer solchen Richtung zwischen der Nabe (2) und Felge (3) übertragen wird, in welcher letztere durch die jeweilige Verbindungsanordnung (A1 bis A4, R1 bis R3, T1, T2) steif miteinander verbunden sind, dadurch **gekennzeichnet,** daß die Radialverbindungsanordnung (R1 bis R3) und/oder die Axialverbindungsanordnung (A1 bis A4) und/oder die Tangentialverbindungsanordnung (T1,T2) kraftflußmäßig unabhängig voneinander zwischen Nabe (2) und Felge (3) angebracht sind und jeweils getrennte Kraftflußmeßpfade für die radialen und/oder die axialen und/oder die tangentialen Kräfte zwischen Nabe (2) und Felge (3) bilden.

2. Meßrad nach Anspruch 1, dadurch **gekennzeichnet,** daß die Axialverbindungsanordnung (A1 bis A4) einerseits und die Radial- und Tangentialverbindungsanordnung (R1 bis R3, T1, T2) andererseits kraftflußmäßig unabhängig voneinander zwischen Nabe (2) und Felge (3) angebracht sind und jeweils getrennte Kraftflußmeßpfade für die axialen Kräfte einerseits und für die radialen und tangentialen Kräfte andererseits zwischen Nabe (2) und Felge (3) bilden.

3. Meßrad nach Anspruch 1 oder 2, dadurch **gekennzeichnet,** daß in oder an jeder der drei Verbindungsanordnungen (A1 bis A4, R1 bis R3, T1, T2) ein oder mehrere Meßelemente vorgesehen sind.

4. Meßrad nach Anspruch 1, 2 oder 3, dadurch **gekennzeichnet,** daß die Axialverbindungsanordnung (A1 bis A4) aus wenigstens drei Axialverbindungen, vorzugsweise aus vier Axialverbindungen, besteht, die vorzugsweise gleichmäßig über den Umfang der Nabe (2) bzw. Felge (3) verteilt angeordnet sind.

5. Meßrad nach einem der Ansprüche 1 bis 4, dadurch **gekennzeichnet,** daß die Radialverbindungsanordnung (R1 bis R3) aus wenigstens zwei Radialverbindungen besteht, die radial nicht miteinander fluchten und vorzugsweise einen Winkel von 90° miteinander bilden.

6. Meßrad nach Anspruch 5, dadurch **gekennzeichnet,** daß die Radialverbindungsanordnung (R1 bis R3) aus drei Radialverbindungen besteht, die über einen Umfangswinkelbereich der Nabe (2) bzw. Felge (3) von 180° gleichmäßig verteilt sind.

7. Meßrad nach einem der Ansprüche 1 bis 6, dadurch **gekennzeichnet,** daß die Tangentialverbindungsanordnung (T1, T2) aus wenigstens einer Tangentialverbindung besteht.

8. Meßrad nach Anspruch 7, dadurch **gekennzeichnet,** daß die Tangentialverbindungsanordnung (T1, T2) aus zwei Tangentialverbindungen besteht, die parallel zu einer Radiallinie der Radachse sowie beidseitig und im gleichen Abstand (R) von dieser Radiallinie angeordnet sind.

9. Meßrad nach den Ansprüche 6 und 8, dadurch **gekennzeichnet,** daß die mittlere (R2) der drei Radialverbindungen (R1 bis R3), welche über den Umfangswinkelbereich der Nabe (2) bzw. Felge (3) von 180° gleichmäßig verteilt sind, auf der über die Radachse hinaus verlaufenden Verlängerung derjenigen Radiallinie liegt, auf deren beiden Seiten die beiden Tangentialverbindungen (T1, T2) angeordnet sind.

10. Meßrad nach einem der Ansprüche 4 bis 8, dadurch **gekennzeichnet,** daß die Radialverbindung (R1 bis R3) zusammen mit einer Axialverbindung (A1 bis A3) in einer beiden gemeinsamen, die Radachse enthaltenden Radialebene angeordnet ist.

11. Meßrad nach einem der Ansprüche 1 bis 10, dadurch **gekennzeichnet,** daß die Axialverbindungsanordnung (A1 bis A4) an einem ersten Nabenvorsprungsteil (5) in dem einen axialen Endbereich der Nabe (2) angreift, während die Radial- und Tangentialverbindungsanordnung (R1 bis R3, T1, T2) an einem zweiten Nabenvorsprungsteil (10) in dem entgegengesetzten axialen Endbereich der Nabe (2) angreift.

12. Meßrad nach Anspruch 11, dadurch **gekennzeichnet,** daß das erste und/oder zweite Nabenvorsprungsteil (5, 10) als erster und/oder zweiter Nabenstern ausgebildet ist, an dessen Sternarmen (6 bis 9, 11 bis 15) die jeweilige Axial- (A1 bis A4) bzw. Radial- (R1 bis R3) bzw. Tangential- (T1, T2) -verbindung angreift.

13. Meßrad nach Anspruch 11 oder 12, dadurch **gekennzeichnet,** daß das erste und zweite Nabenvorsprungsteil (5, 10) durch einen hülsenförmigen Verbindungsteil (16) zu einem Nabenaußenteil (5, 10, 16) fest miteinander verbunden, insbesondere einstückig miteinander und mit dem Verbindungsteil (16) ausgebildet, und als bauliche Einheit lösbar an einem radial inneren Nabeninnenteil (17) befestigt sind.

14. Meßrad nach Anspruch 13, dadurch **gekennzeichnet,** daß die lösbare Befestigung des Nabenaußenteils (5, 10, 16) an dem Nabeninnenteil (17) folgendes umfaßt:
(a) eine, vorzugsweise drehfeste, axial verschiebbare Befestigung des hülsenförmigen Verbindungsteils (16) auf dem Nabeninnenteil (17), insbesondere eine Kerbverzahnungsverbindung (64) zwischen dem Nabeninnenteil (17) und dem Verbindungsteil (16);
(b) einen ersten axialen Anschlag (65) an dem einen axialen Ende und einen zweiten axialen Anschlag (66) an dem entgegengesetzten axialen Ende des Verbindungsteils (16), sowie einen ersten und zweiten Gegenanschlag (67, 70) an dem Nabeninnenteil (17); und
(c) eine Haltevorrichtung (68) zum axialen Fixieren des Nabenaußenteils (5, 10, 16) zwischen den beiden Gegenanschlägen(67, 70).

15. Meßrad nach Anspruch 14, dadurch **gekennzeichnet,** daß die Haltevorrichtung (68) eine Zentralmutter ist oder umfaßt, an welcher der eine (67) der beiden Gegenanschläge (67, 70) vorgesehen ist.

16. Meßrad nach Anspruch 14 oder 15, **gekennzeichnet** durch ein erstes Distanzstück (71), das zwischen den ersten Anschlag (65) und den ersten Gegenanschlag (67) einfügbar ist, und/oder ein zweites Distanzstück (72), das zwischen den zweiten Anschlag (66) und den zweiten Gegenanschlag (70) einfügbar ist.

17. Meßrad nach Anspruch 14, 15 oder 16, dadurch **gekennzeichnet,** daß die Anschläge (65, 66) und Gegenanschläge (67, 70) als doppeltkonische Ringe ausgebildet sind.

18. Meßrad nach einem der Ansprüche 1 bis 17, dadurch **gekennzeichnet,** daß die Axialverbindungsanordnung (A1 bis A4) und/oder die Radialverbindungsanordnung (R1 bis R3) und/oder die Tangentialverbindungsanordnung (T1, T2) eine Lenkerplattenverbindungsanordnung, insbesondere eine Lenkerblechverbindungsanordnung, umfaßt oder ist.

19. Meßrad nach Anspruch 18 in Verbindung mit einem der Ansprüche 3 bis 12, dadurch **gekennzeichnet,** daß die Axialverbindung (A1 bis A4) und/oder die Radialverbindung (R1 bis R3) und/oder die Tangentialverbindung (T1, T2) eine Lenkerplattenverbindung, insbesondere eine Lenkerblechverbindung, umfaßt oder ist.

20. Meßrad nach Anspruch 19, dadurch **gekennzeichnet,** daß die Lenkerplattenverbindung, insbesondere die Lenkerblechverbindung, eine erste und zweite Lenkerplatte, insbesondere ein erstes und zweites Lenkerblech (20, 21; 37, 38; 52, 53) umfaßt, deren Platten- bzw. Blechebenen senkrecht zueinander verlaufen, wobei das eine Ende (22, 43, 54) der einen Lenkerplatte bzw. des einen Lenkerblechs (20; 38; 52) fest mit dem einen Ende (23; 39; 58) der anderen Lenkerplatte bzw. des anderen Lenkerblechs (21; 37; 53) verbunden ist, während das andere Ende (24; 44; 59) der einen Lenkerplatte bzw. des einen Lenkerblechs (20; 38; 52) fest mit der Nabe (2) und das andere Ende (26; 47; 62) der anderen Lenkerplatte bzw. des anderen Lenkerblechs (21; 37; 53) fest mit der Felge (3) verbunden ist.

21. Meßrad nach Anspruch 20, dadurch **gekennzeichnet,** daß die beiden Lenkerplatten bzw. -bleche (20, 21; 37, 38; 52, 53) einer Lenkerplatten- bzw. -blechverbindung so miteinander verbunden sind, daß sie über einen wesentlichen Bereich, vorzugsweise mehr als die Hälfte, ihrer Erstreckung zwischen ihrem ersten und zweiten Ende (22, 24, 23, 26; 43, 44, 39, 47; 54, 59, 58, 63) nebeneinander verlaufen.

22. Meßrad nach Anspruch 21, dadurch **gekennzeichnet,** daß eine der beiden Lenkerplatten bzw. eines (20; 37; 52) der beiden Lenkerbleche (20, 21; 37, 38; 52, 53) ganz oder teilweise in zwei parallele Streifen (20a, 20b; 37a, 37b; 52a, 52b) aufgeteilt ist.

23. Meßrad nach Anspruch 21 oder 22, dadurch **gekennzeichnet,** daß bei einer Axialverbindung (A1 bis A4) die beiden Lenkerplatten bzw. -bleche (20, 21) von der Verbindungsstelle ihrer einen Enden (22, 23) aus in der gleichen Axialrichtung verlaufen, oder bei einer Radialverbindung (R1 bis R3) die beiden Lenkerplatten bzw. -bleche (37, 38) von der Verbindungsstelle ihrer einen Enden (39, 43) aus in der gleichen Radialrichtung verlaufen, oder bei einer Tangentialverbindung (T1, T2) die beiden Lenkerplatten bzw. -bleche (52, 53) von der Verbindungsstelle ihrer einen Enden (54, 58) aus in der gleichen Tangentialrichtung verlaufen.

24. Meßrad nach Anspruch 21 oder 22, dadurch **gekennzeichnet,** daß die einen Enden (39, 43; 54, 58) der beiden Lenkerplatten bzw. -bleche (37, 38; 52, 53) mittels Verbindungsstücken (40; 55) miteinander verbunden sind, welche sich von ihrer Befestigungsstelle an dem einen Ende (43; 54) der einen Lenkerplatte bzw. des einen Lenkerblechs (38; 52) in Richtung nach dem anderen Ende (44; 59) der einen Lenkerplatte bzw. des einen Lenkerblechs (38; 52) zu ihrer Befestigungsstelle an dem einen Ende (39; 58) der anderen Lenkerplatte bzw. des anderen Lenkerblechs (37; 53) erstrecken.

25. Meßrad nach einem der Ansprüche 20 bis 24, dadurch **gekennzeichnet,** daß die beiden Lenkerplatten bzw. -bleche (20, 21; 37, 38; 52, 53) der Lenkerplatten- bzw. -blechverbindung zusammen mit dem bzw. den sie verbindenden Verbindungsstück bzw. -stücken (40, 55) einstückig miteinander sowie gegebenenfalls mit einem oder mehreren Anschlußteilen (34) zum Befestigen an der Nabe (2) und/oder Felge (3) ausgebildet sind.

26. Meßrad nach einem der Ansprüche 1 bis 25, dadurch **gekennzeichnet,** daß das Meßelement aus einer Axial- (A1 bis A4) oder Radial- (R1 bis R3) oder Tangentialverbindung (T1, T2) und einem oder mehreren, in oder an derselben applizierten Dehnungsmeßstreifen gebildet ist.

27. Meßrad nach Anspruch 26, dadurch **gekennzeichnet,** daß das Meßelement aus einer oder beiden Lenkerplatten bzw. einem oder beiden Lenkerblechen (20, 21; 37, 38; 52, 53) einer Lenkerplatten- bzw. -blechverbindung und einem oder mehreren, darauf applizierten Dehnungsmeßstreifen gebildet ist.

28. Meßrad nach Anspruch 26 oder 27, dadurch **gekennzeichnet,** daß in oder an einer Axial- (A1 bis A4) und/oder Radial- (R1 bis R3) und/oder Tangentialverbindung (T1, T2), insbesondere auf einer oder beiden Lenkerplatten bzw. auf einem oder beiden Lenkerblechen (20, 21; 37, 38; 52, 53) einer Lenkerplatten- bzw. -blechverbindung, mehrere Dehnungsmeßstreifen derart appliziert und zu Halb- oder Vollbrücken verschaltet sind, daß nur die Zuganteile gemessen und die Biegeanteile herauskompensiert werden.

29. Meßrad nach einem der Ansprüche 3 bis 28, **gekennzeichnet** durch einen an der Stirnfläche der Felge (3) angebrachten Felgenring (29) zur Befestigung der felgenseitigen Enden (33; 48; 63) der Axial- (A1 bis A4) und/oder Radial- (R1 bis R3) und/oder Tangentialverbindungen (T1, T2).

30. Meßrad nach einem der Ansprüche 1 bis 29, **gekennzeichnet** durch einen Sinus- und Cosinusgeber.

**Claims**

1. Measuring wheel with a hub (2) and a rim (3) as well as with at least one linkage (A1 to A4, R1 to R3, T1, T2) between hub (2) and rim (3) and with one or several measuring elements in or at the linkage (A1 to A4, R1 to R3, T1, T2) for measuring forces and/or moments acting on the rotating measuring wheel (1), whereby the linkage (A1 to A4, R1 to R4, T1, T2) between hub (2) and rim (3) comprises:

    (a) an axial linkage (A1 to A4) connecting, in the axial directions of the wheel and about the vertical axis and the longitudinal axis of measuring wheel (1), hub (2) with rim (3) in rigid manner, but in the other directions in flexible manner;

    (b) a radial linkage (R1 to R3) connecting, in the radial directions of measuring wheel (1), hub (2) with rim (3) in rigid manner, but in the other directions in flexible manner; and

(c) a tangential linkage (T1, T2) connecting, in the peripheral directions about the axis of rotation of the wheel and possibly in the radial direction(s), hub (2) with rim (3) in rigid manner but in the other directions in flexible manner; whereby at least one measuring element of one of the linkages (A1 to A4, R1 to R3, T1, T2) is provided for measuring that force or that moment, which is transmitted in such a direction between hub (2) and rim (3), in which the latter are rigidly connected with one another by the linkage concerned (A1 to A4, R1 to R3, T1, T2), characterised in that the radial linkage (R1 to R3) and/or the axial linkage (A1 to A4) and/or the tangential linkage (T1, T2) are fitted between hub (2) and rim (3) in such a manner as to be in terms of force flow independent of one another, forming in each case separate force-flow measuring paths for the radial and/or axial and/or tangential forces , respectively, between hub (2) and rim (3).

2. Measuring wheel according to claim 1, characterised in that the axial linkage (A1 to A4) on the one hand and the radial and tangential linkages (R1 to R3, T1, T2) on the other hand are fitted between hub (2) and rim (3) in such a manner as to be in terms of force flow independent of one another, forming in each case separate force-flow measuring paths for the axial forces , respectively, on the one hand, and for the radial and tangential forces , respectively, on the other hand.

3. Measuring wheel according to claim 1 or 2, characterised in that one or several measuring elements are provided in or at each of the three linkages (A1 to A4, R1 to R3, T1, T2).

4. Measuring wheel according to claim 1, 2 or 3, characterised in that the axial linkage (A1 to A4) consists of at least three axial links, preferably four axial links, preferably uniformly distributed along the circumference of hub (2) or rim (3), respectively.

5. Measuring wheel according to one of claims 1 to 4, characterised in that the radial linkage (R1 to R3) consists of at least two radial links, radially not aligned with another and preferably forming an angle of 90° in respect of one another.

6. Measuring wheel according to claim 5, characterised in that the radial linkage (R1 to R3) consists of three radial links uniformly distributed along a 180° circumferential angle range of hub (2) or rim (3), respectively.

7. Measuring wheel according to one of claims 1 to 6, characterised in that the tangential linkage (T1, T2) consists of at least one tangential link.

8. Measuring wheel according to claim 7, characterised in that the tangential linkage (T1, T2) consists of two tangential links arranged parallel to a radial line of the wheel axis as well as on both sides and at the same distance (R) from said radial line.

9. Measuring wheel according to claims 6 and 8, characterised in that the middle one (R2) of the three radial links (R1 to R3) uniformly distributed along the 180° circumferential angle range of hub (2) or rim (3), respectively, is located on the extension going beyond the axis of the wheel of that radial line on both sides of which are arranged the two tangential links (T1, T2).

10. Measuring wheel according to one of claims 4 to 8, characterised in that the radial linkage (R1 to R3) is arranged, together with an axial linkage (A1 to A4), in a radial plane common to both and containing the axis of the wheel.

11. Measuring wheel according to one of claims 1 to 10, characterised in that the axial linkage (A1 to A4) engages a first hub projection (5) in one of the axial end zones of hub (2), whereas the radial and tangential linkages (R1 to R3, T1, T2) engage a second hub projection (10) in the opposite axial end zone of hub (2).

12. Measuring wheel according to claim 11, characterised in that the first and/or second hub projection (5, 10) is designed as a first and/or second hub spider, whereby the respective axial linkage (A1 to A4) or radial linkage (R1 to R3) or tangential linkage (T1, T2) respectively, engages the spider arms (6 to 9, 11 to 15) of said hub spider.

13. Measuring wheel according to claim 11 or 12, characterised in that the first and the second hub projection (5, 10) are, by means of a sleeve-type connecting part (16), firmly connected with one another so as to form an outer hub element (5, 10, 16), in that they are in particular integral with one another and provided with a connecting part (16), and in that they are removably secured as a structural unit to an inner hub element (17) which is radially on the inside.

14. Measuring wheel according to claim 13, characterised in that the removable attachment of the outer hub element (5, 10, 16) to the inner hub part (17) comprises the following:

(a) a preferably non-rotating, axially displaceable attachment of the sleeve-type connecting part (16) on the inner hub part (17), in particular a serrated connection (64) between the inner hub element (17) and the connecting part (16);

(b) a first axial abutment (65) at one of the axial ends and a second axial abutment (66) at the opposite axial end of connecting part (16), as well as a first and second counter-abutment (67, 70) at the inner hub element (17); and

(c) a retaining device (68) for axially securing the outer hub elements (5, 10, 16) between the two counter-abutments (67, 70).

15. Measuring wheel according to claim 14, characterised in that the retaining device (68) is a centre nut or comprises a centre nut, on which one (67) of the two counter-abutments (67, 70) is provided.

16. Measuring wheel according to claim 14 or 15, characterised by a first spacer (71) capable of being inserted between the first abutment (65) and the first counter-abutment (67) and/or a second spacer (72) capable of being inserted between the second abutment (66) and the second counter-abutment (70).

17. Measuring wheel according to claim 14, 15 or 16, characterised in that the abutments (65, 66) and the counter-abutments (67, 70) are designed as biconical rings.

18. Measuring wheel according to one of claims 1 to 17, characterised in that the axial linkage (A1 to A4) and/or the radial linkage (R1 to R3) and/or the tangential linkage (T1, T2) comprises or is a control plate linking arrangement, in particular a metallic control plate linkage arrangement.

19. Measuring wheel according to claim 18 in conjunction with one of claims 3 to 12, characterised in that the axial link (A1 to A4) and/or the radial link (R1 to R3) and/or the tangential link (T1, T2) comprises or is a control plate link, in particular a metallic control plate link.

20. Measuring wheel according to claim 19, characterised in that the control plate link, in particular the metallic control plate link comprises a first and a second control plate, in particular a first and second metallic control plate (20, 21; 37, 38; 52, 53), the plate or metallic plate planes of which are at right angles to one another, whereby one end (22, 43, 54) of one of the control plates or of one of the metallic control plates (20; 38; 52), respectively, is firmly connected with one end (23; 39; 58) of the other control plate or the other metallic control plate (21; 37; 53), whereas the other end (24; 44; 59) of one control plate or of one metallic control plate (20; 38; 52), respectively, is firmly connected with hub (2) and the other end (26; 47; 62) of the other control plate or the other metallic control plate (21; 37; 53), respectively, is firmly connected with rim (3).

21. Measuring wheel according to claim 20, characterised in that the two control plates or metallic control plates (20, 21; 37, 38; 52, 53), respectively, of a control plate or metallic control plate link are so connected with one another as to extend over a considerable distance, preferably more than half of their length between their first and second ends (22, 24, 23, 26; 43, 44, 39, 47; 54, 59, 58, 63), next to one another.

22. measuring wheel according to claim 21, characterised in that one of the two control plates or one (20; 37; 52) of the two metallic control plates (20, 21; 37, 38; 52, 53) are wholly or partly sub-divided into two parallel strips (20a, 20b; 37a, 37b; 52a, 52b).

23. Measuring wheel according to claim 21 or 22, characterised in that with an axial link (A1 to A4) the two control plates or metallic control plates (20, 21), respectively, extend from the connecting point of one end of each (22, 23) in the same axial direction or in that with a radial link (R1 to R3) the two control plates or metallic control plates (37, 38), respectively, extend from the connecting point of one end of each (39, 43) in the same radial direction, or in that with a tangential link (T1, T2) the two control plates or metallic control plates (52, 53), respectively, extend from the connecting point of one end of each (54, 58) in the same tangential direction.

24. Measuring wheel according to claim 21 or 22, characterised in that one end each (39, 43; 54, 58) of the two control plates or metallic control plates (37, 38; 52, 53), respectively, are connected by means of linking elements (40; 55) with one another, said linking elements extending from their attachment point at one end (43; 54) of one of the control plates or one of the metallic control plates (38; 52), respectively, in the direction toward the other end (44; 59) of one of the control plates or one of the metallic control plates (38; 52), respectively, to their attachment point at one of the ends (39; 58) of the other control plate or the other metallic control plate (37; 53), respectively.

25. Measuring wheel according to one of claims 20 to 24, characterised in that the two control plates or metallic control plates (20, 21; 37, 38; 52, 53) of the control plate or metallic control plate link together with the linking element or elements (40, 55), respectively, connecting them, are designed integral with one another and possibly provided with one or several connecting parts (34) for attachment to hub (2) and/or rim (3).

26. Measuring wheel according to one of claims 1 to 25, characterised in that the measuring element consists of an axial link (A1 to A4) or radial link (R1 to R3) or tangential link (T1, T2) and one or several strain gauges fitted to them.

27. Measuring wheel according to claim 26, characterised in that the measuring element consists of one or both control plates or one or both metallic control plates (20, 21; 37, 38; 52, 53), respectively, of a control plate or metallic control plate link and one or several strain gauges fitted to them.

28. Measuring wheel according to claim 26 or 27, characterised in that in or at an axial link (A1 to A4) and/or radial link (R1 to R3) and/or tangential link (T1, T2), in particular on one or both control plates or on one or both metallic control plates (20, 21; 37, 38; 52, 53), respectively, of a control plate or metallic control plate link, several strain gauges are fitted and connected so as to form half- or full bridges in such a way that only the tension components are measured and the bending components are eliminated by compensating for them.

29. Measuring wheel according to one of claims 3 to 28, characterised by a rim ring (29) fitted to the end face of rim (3) and serving for attachment of the rim-side ends (33; 48; 63) of the axial links (A1 to A4) and/or the radial links (R1 to R3) and/or the tangential links (T1, T2).

30. Measuring wheel according to one of claims 1 to 29, characterised by a sine and cosine wave generator.

**Revendications**

1. Roue de mesure comportant un moyeu (2) et une jante (3) ainsi qu'au moins un dispositif de liaison (A1 à A4, R1 à R3, T1,T2) disposé entre le moyeu (2) et la jante (3), et un ou plusieurs éléments de mesure situés dans ou sur le dispositif de liaison (A1 à A4, R1 à R3, T1,T2) pour la mesure de forces et/ou de moments, qui agissent sur la roue de mesure rotative (1), le dispositif de liaison (A2 à A4,R1 à R4,T1,T2) situé entre le moyeu (2) et la jante (3) comportant ce qui suit:

   (a) un dispositif de liaison axial (A1 à A4), qui relie le moyeu (2) à la jante (3) d'une manière rigide dans les directions axiales de la roue aussi bien autour de l'axe vertical que de l'axe longitudinal de la roue de mesure (1), mais de façon souple dans les autres directions;

   (b) un dispositif de liaison radial (R1 à R3) qui relie le moyeu (2) à la jante (3) d'une manière rigide dans les directions radiales de la roue de mesure (1), mais de façon souple dans les autres directions; et

   (c) un dispositif de liaison tangentiel (T1,T2), qui relie le moyeu (2) à la jante (3) d'une manière rigide dans les directions circonférentielles autour de l'axe de rotation de la roue ainsi qu'éventuellement dans une ou des directions radiales, mais de façon souple dans les autres directions;

   au moins un élément de mesure étant prévu dans ou sur au moins l'un des dispositifs de liaison (A1 à A4,R1 à R3, T1,T2) pour mesurer la force ou le moment, qui est transmis entre le moyeu (2) et la jante (3) dans une direction, dans laquelle ces deux unités sont reliées entre elles de façon rigide par le dispositif de liaison respectif (A1 à A4, R1 à R3, T1,T2), caractérisé en ce que le dispositif de liaison radial (R1 à R3) et/ou le dispositif de liaison axiale (A1 à A4) et/ou le dispositif de liaison tangentiel (T1,T2) sont disposés entre le moyeu (2) et la jante (3) en étant dépendant les uns des autres du point de vue du flux de force et forment des voies respectivement séparées de mesure du flux de force pour les forces radiaux et/ou axiaux et/ou tangentiels entre le moyeu (2) et entre la jante (3).

2. Roue de mesure selon la revendication 1, caractérisé en ce que le dispositif de liaison axial (A1 à A4) d'une part et les dispositifs de liaison radial et tangentiel (R1 à R3, T1,T2) d'autre part sont installés entre le moyeu (2) et la jante (3) en étant indépendants l'un de l'autre du point de vue du flux de force et forment respectivement des voies séparées de mesure du flux de force pour les forces aixiaux d'une part et pour les forces radiaux et tangentiels d'autre part.

3. Roue de mesure suivant la revendication 1 ou 2, caractérisée en ce qu'un ou plusieurs éléments de mesure sont prévus dans ou sur chacun des trois dispositifs de liaison (A1 à A4,R1 à R3,T1,T2).

4. Roue de mesure selon la revendication 1,2 ou 3, caractérisée en ce que le dispositif de liaison axial (A1 à A4) est constitué par au moins trois liaisons axiales et de préférence par quatre liaisons axiales, qui sont disposées en étant réparties de préférence uniformément sur le pourtour du moyeu (2) ou de la jante (3).

5. Roue de mesure selon l'une quelconque des revendications 1 à 4, caractérisé en ce que la dispositif de liaison radial (R1 à R3) est constitué par au moins deux liaisons radiales, qui ne sont pas alignées radialement entre elles et font entre elles de préférence un angle de 90°.

6. Roue de mesure selon la revendication 5, caractérisée en ce que le dispositif de liaison radial (R1 à R3) est constitué de trois liaisons radiales, qui sont réparties uniformément sur une plage angulaire de 180° de la circonférence du moyeu (2) ou de la jante (3).

7. Roue de mesure selon l'une des revendications 1 à 6, caractérisée en ce que le dispositif de liaison tangentiel (T1,T2) est constitué par au moins une liaison tangentielle.

8. Roue de mesure selon la revendication 7, caractérisée en ce que le dispositif de liaison tangentiel (T1,T2) est constitué par deux liaisons tangentielles, qui sont disposées parallèlement à une ligne radiale de l'axe de la roue ainsi que des deux côtés et à une même distance (T) de cette ligne radiale.

9. Roue de mesure selon les revendications 6 et 8, caractérisée en ce que la liaison radiale centrale (R2), qui fait partie des trois liaisons radiales (R1 à R3), qui sont réparties uniformément sur la plage angulaire 180° sur la circonférence du moyeu (2) ou de la jante (3), est située sur le prolongement, qui s'étend au-delà de l'axe de la roue, de la ligne radiale, des deux côtés de laquelle sont disposées les deux liaisons tangentielles (T1,T2).

10. Roue de mesure selon l'une des revendications 4 à 8, caractérisée en ce que la liaison radiale (R1 à R3) est disposée, ainsi qu'une liaison axiale (A1 à A3), dans un plan radial qui leur est commun et contient l'axe de la roue.

11. Roue de mesure selon l'une quelconque des revendications 1 à 10, caractérisée en ce que le dispositif de liaison axial (A1 à A4) est accroché à une première partie saillante (5) du moyeu (2), dans la zone de l'extrémité axiale de ce dernier, tandis que le dispositif de liaison radial et le dispositif de liaison tangentiel (R1 à R3,T1,T2) sont accrochés à une seconde partie saillante (10) du moyeu (2), dans la zone axiale d'extrémité opposée de ce dernier.

12. Roue de mesure selon la revendication 11, caractérisée en ce que la première et/ou la seconde partie saillante (5,10) du moyeu est réalisée sous la forme d'une première et/ou d'une seconde étoile du moyeu, aux branches (6 à 9, 9 à 15) de laquelle s'accrochent les liaisons axiales respectives (A1 à A4) ou les liaisons radiales respectives (R1 à R3) ou les liaisons tangentielles respectives (T1,T2).

13. Roue de mesure selon les revendications 11 ou 12, caractérisée en ce que les première et seconde parties saillantes (5,10) des moyeux sont reliées entre elles rigidement par un élément de liaison en forme de douille (16), pour former une partie extérieure (5,10,16) du moyeu, et notamment sont reliées entre elles d'un seul tenant et sont formées avec l'élément de liaison (16) et sont fixées de façon amovible, sous la forme d'une unité de construction, sur une partie (17) du moyeu, intérieure du point de vue radial.

14. Roue de mesure suivant la revendication 13, caractérisée en ce que la fixation amovible de la partie extérieure (5,10,16) du moyeu sur la partie intérieure (17) de ce dernier comprend ce qui suit:

(a) une fixation, de préférence avec blocage en rotation et possibilité de déplacement axial, de l'élément de liaison en forme de douille (16) sur la partie intérieure (17) du moyeu, notamment un dispositif de liaison (64) à dentures et encoches entre la partie intérieure (17) du moyeu et l'élément de liaison (16);

(b) une première butée axiale (65) située sur une extrémité axiale et une seconde butée axiale (66) située sur l'extrémité axiale opposée de l'élément de liaison (16), ainsi que des première et seconde butées antagonistes (64,70) situées sur la partie intérieure (17) du moyeu; et

(c) un dispositif de maintien (68) servant à fixer axialement la partie extérieure (5,10,16) du moyen entre les deux butées antagonistes (67,70).

**15.** Roue de mesure selon la revendication 14, caractérisée en ce que le dispositif de maintien (68) est ou comporte un écrou central, sur lequel est prévue l'une (67) des deux butées antagonistes (67,70).

**16.** Roue de mesure selon la revendication 14 ou 15, caractérisée par une première entretoise (71), qui peut être insérée entre la première butée (65) et la première butée antagoniste (67), et/ou une seconde entretoise (72), qui peut être insérée entre la seconde butée (66) et la seconde butée antagoniste (70).

**17.** Roue de mesure suivant la revendication 14, 15 ou 16, caractérisée en ce que les butées (65,66) et les butées antagonistes (67,70) sont réalisées sous la forme de bagues biconiques.

**18.** Roue de mesure selon la revendication 1 à 17, caractérisée en ce que le dispositif de liaison axial (A1 à A4) et/ou le dispositif de liaison radial (R1 à R3) et/ou le dispositif de liaison tangentiel (T1,T2) est ou comporte un dispositif de liaison à plaques oscillantes, notamment un dispositif de liaison à tôles oscillantes.

**19.** Roue de mesure selon la revendication 18 en liaison avec une des revendications 3 à 12, caractérisée en ce que la liaison axiale (A1 à A4) et/ou la liaison radiale (R1 à R3) et/ou la liaison tangentielle (T1,T2) est ou comporte une liaison à plaques oscillantes, notamment une liaison à tôles oscillantes.

**20.** Roue de mesure selon la revendication 19, caractérisée en ce que le dispositif de liaison à plaques oscillantes, notamment le dispositif de liaison à tôles oscillantes, comporte des première et seconde plaques oscillantes, notamment des première et seconde tôles oscillantes (20,21;37,38;52,53), dont les plans sont perpendiculaires entre eux, une extrémité (22,43,54) d'une plaque oscillante ou d'une tôle oscillante (20;38;52) étant reliée rigidement à une extrémité (23;39;58) de l'autre plaque oscillante ou de l'autre tôle oscillante (21;37;53), tandis que l'autre extrémité (24;44;59) d'une plaque oscillante ou d'une tôle oscillante (20;38;52) est reliée rigidement au moyeu (2) et que l'autre extrémité (26;47;62) de l'autre plaque oscillante ou de l'autre tôle oscillante (21;37;53) est reliée rigidement à la jante (3).

**21.** Roue de mesure selon la revendication 20, caractérisée en ce que les deux plaques oscillantes ou les deux tôles oscillantes (20,21;37,38;52,53) d'un dispositif de liaison à plaques oscillantes ou à tôles oscillantes sont reliées entre elles de telle sorte qu'elles s'étendent côte-à-côte sur une zone importante, de préférence sur plus de la moitié, de leur étendue entre les première et seconde extrémités (22,24,23,28;43,44,39,47;54,59,58,63).

**22.** Roue de mesure selon la revendication 21, caractérisée en ce que l'une des plaques oscillantes ou l'une (20;37;52) des deux tôles oscillantes (20,21;37,38;52,53) est subdivisée totalement ou partiellement en deux bandes parallèles (20a,20b;37a,37b;52a,52b).

**23.** Roue de mesure selon la revendication 22, caractérisée en ce que dans le cas d'une liaison axiale (A1 à A4), les deux plaques oscillantes ou les deux tôles oscillantes (20,21) s'étendent à partir du point de jonction de premières extrémités (22,23) dans la même direction axiale, ou bien dans le cas d'une liaison radiale (R1 à R3), les deux plaques oscillantes ou tôles oscillantes (37,38) s'étendent à partir du point de jonction de premières extrémités (A1, A3) dans la même direction radiale, ou bien dans le cas d'une liaison tangentielle (T1,T2), les deux plaques ou tôles oscillantes (52,53) s'étendent à partir du point de jonction de premières extrémités (54,58) dans la même direction tangentielle.

**24.** Roue de mesure selon la revendication 21 ou 22, caractérisée en ce que les premières extrémités (39,43;54,58) des deux plaques ou tôles oscillantes (37,38;52,53) sont reliées entre elles à l'aide d'éléments de liaison (40;55), qui s'étendent à partir de leur point de fixation sur une première extrémité (43;54) d'une première plaque oscillante ou d'une première tôle oscillante (38;52) en direction de l'autre extrémité (44;59) de la première plaque oscillante ou de la première tôle oscillante (38;52) jusqu'à leur point de fixation situé sur la première extrémité (39;58) de l'autre plaque oscillante ou de l'autre tôle oscillante (37;53).

**25.** Roue de mesure selon l'une des revendications 1 à 24, caractérisée en ce que les deux plaques ou tôles oscillantes (20,21;37,38;52;53) du dispositif de liaison à plaques ou tôles oscillantes sont, ainsi que le ou les éléments de liaison (40,55) les réunissant, reliées entre elles d'un seul tenant ainsi que, éventuellement, avec un ou plusieurs éléments de raccordement (34) pour la fixation sur le moyeu (2) et/ou la jante (3).

26. Roue de mesure selon l'une des revendications 1 à 25, caractérisée en ce que l'élément de mesure est formé par une liaison axiale (A1 à A4) ou une liaison radiale (R1 à R3) ou une liaison tangentielle (T1,T2) et par une ou plusieurs jauges extensométriques installées dans ou sur de telles liaisons.

27. Roue de mesure selon la revendication 26, caractérisée en ce que l'élément de mesure est formé par une ou deux plaques oscillantes ou une ou deux tôles oscillantes (20,21;37,38;52,53), un dispositif de liaison à plaques oscillantes ou à tôles oscillantes et une ou plusieurs jauges extensométriques installées sur ces dispositifs.

28. Roue de mesure selon la revendication 26 ou 27, caractérisée en ce que plusieurs jauges extensométriques sont disposées dans ou sur une liaison axiale (A1 à A4) et/ou une liaison radiale (R1 à R3) et/ou une liaison tangentielle (T1,T2), notamment sur l'une des deux plaques oscillantes ou tôles oscillantes (20,21;37,38;52,53) ou sur ces deux plaques ou tôles oscillantes et sont raccordées de manière à former un demi-pont ou un pont complet de sorte que seules des composantes de traction sont mesurées et que les composantes de flexion s'éliminent en se compensant.

29. Roue de mesure selon l'une des revendications 3 à 28, caractérisée par un anneau de jante (29) installé sur la face frontale de la jante (3) et servant à fixer les extrémités (33;48;63), situées du côté de la jante, des liaisons axiales (A1 à A4) et/ou des liaisons radiales (R1 à R3) et/ou des liaisons tangentielles (T1,T2).

30. Roue de mesure selon l'une des revendications 1 à 29, caractérisée par un transmetteur de sinus et de co-sinus.

# FIG. 1

$F_z$ = Vertikalkraft $F_v$     $M_z$ = Lenkmoment $M_L$

$F_y$ = Seitenkraft $F_s$     $M_y$ = Antriebs-/Bremsmoment $M_{AB}$

$F_x$ = Längskraft $F_L$     $M_x$ = Sturzmoment $M_s$

FIG. 2

FIG. 3

FIG. 4

FIG.5